# EUROPEAN PATENT APPLICATION

(11) **EP 2 565 494 A1**
(43) Date of publication of application: **06.03.2013**
(21) Application number: 11775035.6
(22) Date of filing: 27.04.2011
(51) Int. Cl.: F16G 13/12, E06B 9/326

(54) **BALL CHAIN MANUFACTURING METHOD, AND BALL CHAIN CONNECTING MEMBER**

(30) Priority: 30.04.2010 JP 2010105932
(71) Applicant: Tachikawa Corporation, Tokyo 108-8334 (JP)
(72) Inventor: KAWAI, Eiji, Tokyo 108-8334 (JP); NAKAMURA, Hajime, Tokyo 108-8334 (JP)
(74) Representative: Gulde Hengelhaupt Ziebig & Schneider
(86) International application number: PCT/JP2011/060226
(87) International publication number: WO 2011/136254

(57) **Abstract**

Provided is a method for manufacturing a ball chain by which ball chains of various circumferential lengths can easily be manufactured. The present invention provides a method for manufacturing a ball chain. The method includes the steps of: forming a first ball chain portion having a hemispheroids at an end thereof, forming either a second ball chain portion having a hemispheroids at an end thereof, or forming a coupling member including a portion that can be coupled and divided and having a hemispheroids at an end thereof; and joining either respective ends of the first and second ball chain portions or respective ends of the first ball chain portion and the coupling member.

## Description

### TECHNICAL FIELD

The present invention relates to a method for manufacturing a ball chain which is used as the operation cord of an elevator for a horizontal blind, a vertical blind, a shade, a screen window, an up-down sliding window, an awning, a skylight window, a laundry pole, and other apparatuses; and a coupling member which is suitably used in this manufacturing method.

### BACKGROUND ART

There is a type of horizontal blind where an endless ball chain is engaged with a pulley which is rotatably supported by an edge of a head box. By operating the ball chain to rotate the pulley, a force is transmitted to a slat drive mechanism in the head box. Thus, slat raising/lowering operation and slat angle adjustment can be performed.

A ball chain is formed, for example, by molding synthetic-resin balls on a string-shaped, synthetic-resin cord at regular intervals and fixing the balls to the cord (for example, see Patent Document 1). By sequentially engaging the balls with recesses formed on the peripheral surface of a pulley, the pulley can be rotationally driven.

Such a ball chain typically has an endless structure where both ends of a cord having many molded balls attached thereto are coupled via a connector. For a horizontal blind, where a slat elevation operation is performed by rotating a ball chain about a pulley one or more times, the shape of balls on a ball chain coupling portion and the interval between the balls must be the same as those on other portions.

### PRIOR ART DOCUMENTS

### PATENT DOCUMENTS

Patent Document 1: Japanese Unexamined Utility Model Application Publication No. 62-45025

### SUMMARY OF THE INVENTION

### PROBLEMS TO BE SOLVED BY THE INVENTION

As described above, a ball chain is used in various apparatuses such as a blind and an awning. Accordingly, a required circumferential length varies among ball chains. Since a blind which matches the window size is preferred, a blind is often custom-made. To manufacture blinds in a custom-made manner, ball chains of various circumferential lengths are required. However, preparing ball chains of various circumferential lengths requires cost and time.

In view of the foregoing, the present invention has been made, and an object thereof is to provide a method for manufacturing a ball chain by which ball chains of various circumferential lengths can easily be manufactured.

### MEANS FOR SALVING THE PROBLEMS

The present invention provides a method for manufacturing a ball chain. The method includes the steps of: forming a ball chain portion having a plurality of balls disposed on a cord at regular intervals; forming a coupling member including a portion that can be coupled and divided; cutting the ball chain portion in such a manner that a loop length thereof becomes a desired length; and joining respective ends of the ball chain portion and the coupling member.

In this method, the length of the ball chain portion is adjusted by cutting it, and a looped ball chain or ball chain capable of being looped is formed by joining an end of the ball chain portion and an end of the coupling member together. Accordingly, by preparing ball chain portions having one or several lengths, ball chains of various circumferential lengths can be formed. Accordingly, according to the present invention, ball chains of various circumferential lengths can be manufactured.

In this specification, the term "joining" refers to combining two objects by fixing (bonding, welding), sewing, swaging, or the like. The term "coupling member" refers to a combination of members that can be coupled together and divided. Multiple members forming a "coupling member" may be coupled together or divided.
The term "an end of a coupling member" refers to a portion that serves as an end of a "coupling member" formed by coupling multiple members together.
Hereafter, various embodiments of the present invention will be described. Various embodiments described below can be combined.

In an example, the coupling member has a hemispheroid at an end thereof, and the ball chain portion is cut in such a manner that an end thereof becomes a hemispheroid. In this specification, a "hemispheroid" preferably has a shape corresponding to half a ball disposed on a ball chain portion. However, the shape need not always be a half and may be slightly larger or smaller than a half.

In an example, the ball chain portion is formed by forming a ball chain body having many balls disposed on a cord at regular intervals and cutting the ball chain body in such a manner that ends thereof become hemispheroids and the loop length thereof becomes the desired length.

In an example, the ball chain portion is formed by outsert-molding balls on a cord.

In an example, the coupling member includes first and second coupling members. The first coupling member includes a first fitting part and has a hemispheroid at an end thereof. The second fitting member includes a second fitting part and has a hemispheroid at an end thereof. The second fitting part is capable of being fitted with the first fitting part. An external shape of the first and second fitting parts fitted with each other is approximately the same shape as the balls on the ball chain portion.

In an example, the first coupling member is formed by outsert-molding the first fitting part and the hemispheroid on a cord and cutting the cord at respective ends of the first fitting part and the hemispheroid. The first fitting part includes a fitting protrusion, which is a solid body. The second coupling member is formed by outsert-molding a precursor of the second fitting protrusion and the hemispheroid on a cord, cutting the cord at respective ends of the precursor and the hemispheroid, and drilling a fitting hole in the precursor to form the second fitting part.

In an example, a front end of the fitting protrusion is provided with a swelled portion having a diameter larger than a diameter of a base end thereof. A deep portion of the fitting hole is provided with a locking portion configured to resiliently hold the swelled portion.

In an example, the fitting protrusion can be fitted into the fitting hole by inserting the fitting protrusion into the fitting hole and rotating it.

In an example, the fitting protrusion is shank-shaped, the fitting hole has a diameter which allows the fitting protrusion to be inserted into the fitting hole, and an open groove which allows the fitting protrusion to be pulled out in an axis direction of the cord, and a width of the open groove is narrower than a diameter of the fitting protrusion.

In an example, the coupling member includes a pair of first coupling members each including a first fitting part and having a hemispheroid at an end thereof; and a second coupling member including a pair of second fitting parts configured to be fitted with the pair of first coupling members, respectively.

In an example, the first coupling member is formed by outsert-molding the first fitting part and the hemispheroid on a cord and cutting the cord at respective ends of the first fitting part and the hemispheroid, and the second coupling member is formed by injection molding.

In an example, the first fitting part of the first coupling member includes a fitting protrusion, which is a solid body. The second coupling member is a tubular member having second fitting parts at both ends thereof. The second fitting part has a fitting hole provided with a locking portion. A front end of the fitting protrusion is provided with a swelled portion having a diameter larger than a diameter of a base end of the fitting protrusion. The fitting hole is provided with the locking portion configured to engage with the swelled portion.

In an example, the locking portion provided in the fitting hole engages with the swelled portion by inserting the swelled portion into the fitting hole and rotating the swelled portion.

In an example, fitting angles of a pair of fitting protrusions fitted into a second coupling member are shifted from each other.

In an example, the swelled portion is provided on the entire outer peripheral surface of the fitting protrusion.

In an example, the fitting part of the first coupling member has a fitting hole. The second coupling member includes a pair of fitting protrusions and a shaft. The fitting protrusions are provided at both ends of the second coupling member and are capable of being fitted into the fitting hole. The shaft couples the pair of fitting protrusions together. The fitting hole is a fitting hole into which the fitting protrusions can be inserted in a direction perpendicular to an axis of the cord.

In an example, the fitting protrusion is shank-shaped. The fitting hole has a diameter which allows the fitting protrusion to be inserted into the fitting hole, and an open groove which allows the fitting protrusion to be pulled out in an axis direction of the cord. A width of the open groove is narrower than a diameter of the fitting protrusion.

In an example, the second coupling member is formed by integrally molding the fitting protrusion and the shaft from synthetic resins having different rigidities.

The present invention also provides a method for manufacturing a ball chain. The method includes multiple ball chain portions each having a hemispheroid at an end thereof, forming multiple coupling members each having a hemispheroid at an end thereof and a portion that can be coupled and divided; fixing respective ends of the coupling members to one of the ball chain portions; and fixing the respective other ends of the coupling members to another of the ball chain portions.

This ball chain including the coupling members which are separated from each other at a predetermined distance can be manufactured easily.

In an example, there is included a step of cutting at least one of the ball chain portions in such a manner that an end of the ball chain portion becomes a hemispheroid and a loop length of the ball chain portion becomes a desired length.

The present invention also provides a method for manufacturing a ball chain for an operation apparatus where by operating a ball chain engaged with a pulley and suspended from the pulley, the pulley is rotationally driven. The method includes the steps of: forming a ball chain portion having a plurality of balls disposed on a cord at regular intervals; forming a coupling member having a hemispheroid at an end thereof and a portion that can be coupled and divided; cutting the ball chain portion in such a manner that an end thereof becomes a hemispheroid and a loop length thereof becomes a desired length; and coupling respective ends of the ball chain portion and the coupling member. The coupling member comprises a pair of first coupling members, a third coupling member, and a pair of second coupling members. Each first coupling member includes a first fitting part and has a hemispheroid at an end thereof. The third coupling member has first fitting parts at both ends thereof. A length of the third coupling member is half or more of a circumferential length of the pulley. Each second coupling member includes a pair of fitting parts configured to engage with the first fitting parts of the first coupling members and the first fitting parts of the third coupling members.

According to the present invention, both ends of the third coupling members are coupled to the pair of second coupling members, and the length of the third coupling member is half or more the circumferential length of the pulley. Accordingly, the second coupling members forming a pair are separated from each other at a distance of half or more the circumferential length of the pulley. The first coupling members are coupled to the second coupling members, and the first coupling members are fixed to the ball chain portion to form a looped ball chain or ball chain capable of being looped. When a force exceeding a threshold is applied to the ball chain, the ball chain is divided at the second coupling member. Since the pair of second coupling members are sufficiently separated from each other, both the second coupling members are not engaged with the pulley. Accordingly, when a force exceeding a threshold is applied to the ball chain, the ball chain is reliably divided.

The present invention also provides a coupling member including a first coupling member including a first fitting part and having a hemispheroid at an end thereof; and a second coupling member including a second fitting part capable of being fitted with the first fitting part and having a hemispheroid at an end thereof. The present invention also provides a coupling member including a pair of first coupling members each including a first fitting part and having an hemispheroid at an end thereof; and a second coupling member including a pair of second fitting parts configured to be fitted with the pair of first coupling members, respectively. Use of these coupling members allows the method for manufacturing a ball chain according to the present invention to be easily performed.

### EFFECT OF THE INVENTION

According to the present invention, it is possible to provide a method for manufacturing a ball chain by which ball chains of various circumferential lengths can easily be manufactured.

### BRIEF DESCRIPTION OF THE DRAWINGS

Fig. 1 is a front view showing a horizontal blind of a first embodiment;
Fig. 2 is a front view showing a ball chain of the first embodiment;
Fig. 3 is an exploded perspective view showing a coupling member of the first embodiment;
Fig. 4 is a front view showing a first coupling member of the first embodiment;
Fig. 5 is a sectional view showing a second coupling member of the first embodiment;
Fig. 6 is a sectional view showing a fitting state of the coupling member of the first embodiment;
Fig. 7 is a flowchart showing an overall process of manufacturing a ball chain of the first embodiment;
Fig. 8 is a flowchart showing a process of manufacturing a ball chain of the first embodiment;
Fig. 9 is a flowchart showing a process of manufacturing a coupling member of the first embodiment;
Fig. 10 is a flowchart showing a process of manufacturing a ball chain by joining a ball chain portion and a coupling member of the first embodiment;
Fig. 11 is a front view showing a ball chain portion manufacturing process in step SA1 of the first embodiment;
Fig. 12 is a front view showing a process of manufacturing a first coupling member of a coupling member of the first embodiment;
Fig. 13 is a front view showing a process of manufacturing a second coupling member of a coupling member of the first embodiment;
Fig. 14 is a front view showing a process of coupling the first coupling member and the second coupling member of the first embodiment;
Fig. 15 is a front view showing a step of cutting a ball chain portion of the first embodiment;
Fig. 16 is a front view showing another example of a process of cutting a ball chain portion of the first embodiment;
Fig. 17 is a front view showing a ball chain of a second embodiment;
Fig. 18 is an exploded perspective view showing the second embodiment;
Fig. 19 is a front view showing a first coupling member of the second embodiment;
Fig. 20 is a bottom view showing the first coupling member of the second embodiment;
Fig. 21 is a sectional view taken along line A-A of Fig. 19;
Fig. 22 is a sectional view showing a second coupling member of the second embodiment;
Fig. 23 is a plan view showing the second coupling member of the second embodiment;
Fig. 24 is a sectional view taken along line B-B of Fig. 22;
Fig. 25 is a sectional view showing a fitting state of the coupling member of the second embodiment;
Fig. 26 is a front view showing a ball chain of a third embodiment;
Fig. 27 is a sectional view showing a coupling member of the third embodiment;
Fig. 28 is an exploded perspective view showing the coupling member of the third embodiment;
Fig. 29 is a front view showing a first coupling member of the third embodiment;
Fig. 30 is a plan view showing the first coupling member of the third embodiment;
Fig. 31 is a side view showing the first coupling member of the third embodiment;
Fig. 32 is a sectional view taken along line C-C of Fig. 29;
Fig. 33 is a front view showing a second coupling member of the third embodiment;
Fig. 34 is a rear view showing the second coupling member of the third embodiment;
Fig. 35 is a sectional view taken along line D-D of Fig. 33;
Fig. 36 is a sectional view taken along line E-E of Fig. 33;
Fig. 37 is a sectional view taken along line F-F of Fig. 35;
Fig. 38 is a sectional view showing a fitting state of the coupling member of the third embodiment;
Fig. 39 is a flowchart showing a process of manufacturing the coupling member of the third embodiment;
Fig. 40 is a front view showing a process of manufacturing a first coupling member of the coupling member of the third embodiment;
Fig. 41 is a front view showing another example of a process of manufacturing the first coupling member of the coupling member of the third embodiment;
Fig. 42 is an exploded perspective view showing a ball chain of a fourth embodiment;
Fig. 43 is a front view showing a ball chain of a fifth embodiment;
Fig. 44 is an exploded perspective view showing a coupling member of the fifth embodiment;
Fig. 45 is a front view showing a second coupling member of the fifth embodiment;
Fig. 46 is a side view showing the second coupling member of the fifth embodiment;
Fig. 47 is a front view showing a first coupling member of the fifth embodiment;
Fig. 48 is a side view showing the first coupling member of the fifth embodiment;
Fig. 49 is a sectional view taken along line G-G of Fig. 47;
Fig. 50 is a sectional view taken along line H-H of Fig. 47;
Fig. 51 is a sectional view showing a fitting state of the coupling member of the fifth embodiment;
Fig. 52 is a flowchart showing a process of manufacturing the coupling member of the fifth embodiment;
Fig. 53 is a front view showing a process of manufacturing the first coupling member the coupling member of the fifth embodiment;
Fig. 54 is an exploded perspective view showing a coupling member of a ball chain of a sixth embodiment;
Fig. 55 is a sectional view showing a fitting state of the coupling member of the sixth embodiment;
Fig. 56 is a front view showing a ball chain of a seventh embodiment;
Fig. 57 is a flowchart showing a process of manufacturing a coupling member of the seventh embodiment;
Fig. 58 is a flowchart showing a process of manufacturing a ball chain by joining a ball chain portion and the coupling member of the seventh embodiment;
Fig. 59 is a front view showing a process of manufacturing a first coupling member of the seventh embodiment;
Fig. 60 is a front view showing a process of cutting a main cord of the seventh embodiment;
Fig. 61 is a front view showing another example of a process of cutting the main cord of the seventh embodiment;
Fig. 62 is a front view showing a ball chain of an eighth embodiment;
Fig. 63 is a sectional view showing an operation apparatus for a horizontal blind of the eighth embodiment;
Fig. 64 is a sectional view showing the operation apparatus for a horizontal blind of the eighth embodiment;
Fig. 65 is a front view showing another example of an operation apparatus for a horizontal blind of the eighth embodiment;
Fig. 66 is a flowchart showing a process of manufacturing a ball chain of the eighth embodiment;
Fig. 67 is a front view showing a process of manufacturing a ball chain portion of the eighth embodiment;
Fig. 68 is a front view showing a ball chain of a ninth embodiment;
Fig. 69 is a front view showing the ball chain of a ninth embodiment;
Fig. 70 is a front view showing another example of an operation apparatus for a horizontal blind of the ninth embodiment;
Fig. 71 is a flowchart showing a process of manufacturing a coupling member of the ninth embodiment; and
Fig. 72 is a front view showing a process of manufacturing a third coupling member of a coupling member of the ninth embodiment.

### EMBODIMENTS FOR CARRYING OUT THE INVENTION

### (First Embodiment)

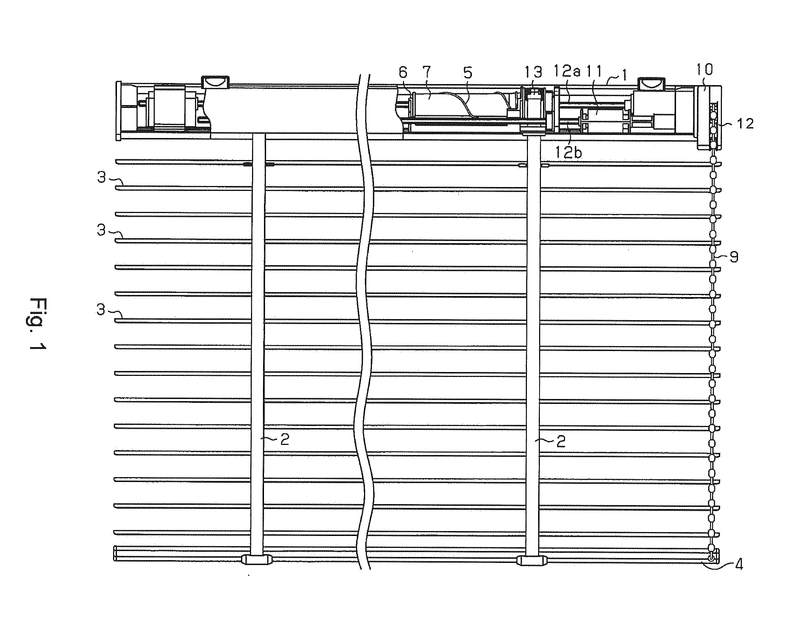

Hereafter, a first embodiment of the present invention will be described with reference to the drawings. In a horizontal blind shown in Fig. 1, multiple slats 3 are supported by ladder tapes 2 which are suspended and supported by a head box 1, and a bottom rail 4 is attached to the bottom ends of the ladder tapes 2

Hoisting cords 5 are inserted into the slats 3 near the positions at which the slats 3 are supported by the ladder tapes 2, and the bottom rail 4 is suspended and supported by the bottom ends of the hoisting cords 5. The top ends of the hoisting cords 5 are wound around a winding shaft 7 which is rotatably supported by a supporting member 6 disposed in the head box 1.

A pulley 12 is rotatably supported by an end of the head box 1, and an endless ball chain 9 is engaged with the pulley 12. Rotations of the pulley 12 in a forward or reverse direction made by operating the ball chain 9 are transmitted to the winding shaft 7 via a gear box 10, a hoisting shaft 12a, and the like. Thus, the winding shaft 7 rotates to wind or unwind the hoisting cords 5, raising or lowering the slats 3 and the bottom rail 4.

Further, rotations of the pulley 12 are transmitted to a tilt drum 13 via the gear box 10, a tilt unit 11, a tilt shaft 12b, and the like. Thus, the tilt drum 13 makes rotations, which are then transmitted to the slats 3 via the ladder tapes 2 to rotate the slats 3.

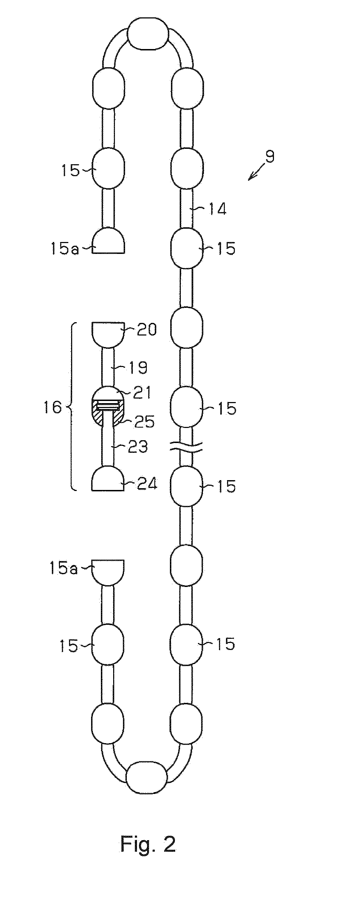

Referring now to Figs. 2 to 6, the specific configuration of the ball chain 9 will be described.
As shown in Fig. 2, in the ball chain 9, balls 15 of a synthetic resin are molded at regular intervals on the cord 14 of polyester. The balls 15 are prolate spheroidal solid bodies molded on a surface of the cord 14 by a molding machine and are immovably fixed to the cord 14.

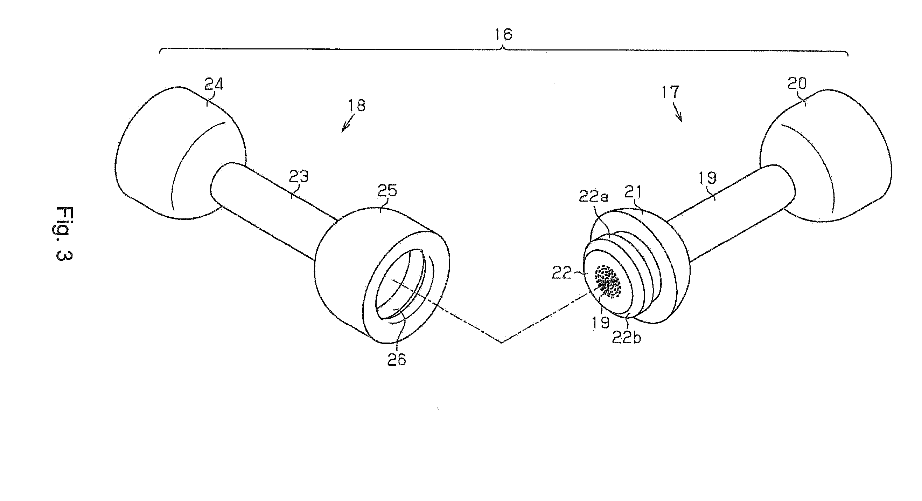

Both ends of the cord 14 are coupled together using a coupling member 16 to form the endless ball chain 9. As shown in Fig. 3, the coupling member 16 includes a first coupling member 17 and a second coupling member 18.

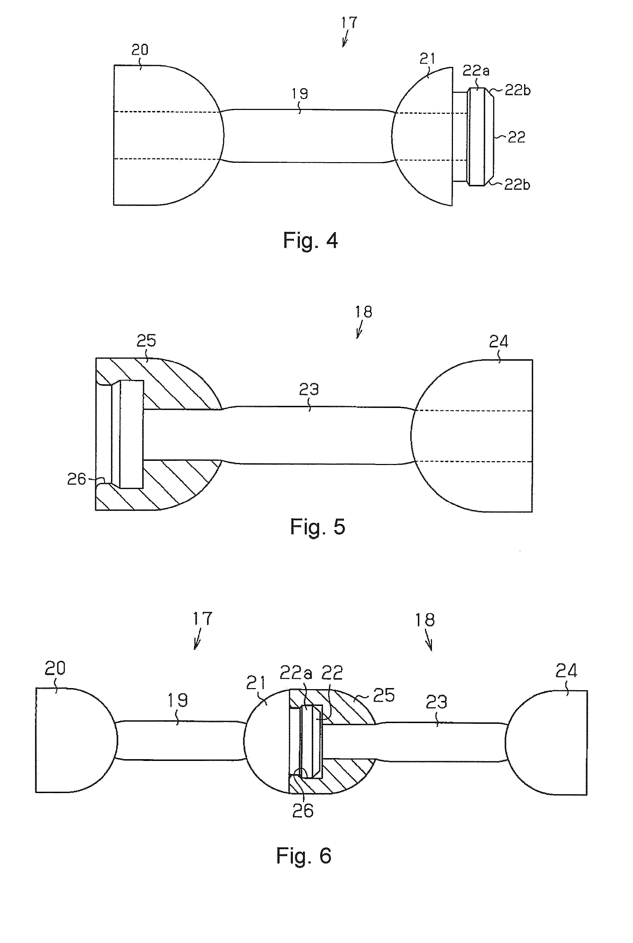

As shown in Fig. 4, in the first coupling member 17, a hemispheroid 20 (half portion) having a shape slightly larger than half the ball 15 is outsert-molded at an end of a coupling cord 19 which is made of the same material as the cord 14, and a first fitting part 21 is outsert-molded at the other end so as to be a solid body as a whole, including the front end thereof. The interval between the hemispheroid 20 and the first fitting part 21 is the same as the interval between the balls 15.

As shown in Fig. 3, the first fitting part 21 is outsert-molded as a solid body so that the coupling cord 19 is embedded in a portion from the front end to the base end of the first fitting part 21. Accordingly, the joining strength between the first fitting part 21 and the coupling cord 19 is ensured. Fig. 4 shows a case where the coupling cord 19 is embedded in the first fitting part 21 up to near the front end thereof. In such a case, the strength of a fitting protrusion 22 in a compression direction is easy to ensure.

The hemispheroid 20 and the first fitting part 21 are formed of the same material as the balls 15 at both ends of the coupling cord 19.
The base end of the first fitting part 21 is formed in a hemispheroid similar to an end of the ball 15. Formed at the front end thereof is the round shank-shaped fitting protrusion 22. Formed at the front end of the fitting protrusion 22 is a flange-shaped swelled portion 22a. The swelled portion 22a has an external shape with a diameter smaller than the maximum diameter of the hemispheric base end thereof. Formed at front end corners of the swelled portion 22a are chamfered edges 22b which allow the swelled portion 22a to be easily fitted into a fitting hold 26.

The first fitting part 21 is integrally molded at the other end of the coupling cord 19. Alternatively, after molding the first fitting part 21 as with the hemisphere 20, the fitting protrusion 22 may be formed by cutting.
As shown in Fig. 5, in the second coupling member 18, the hemispheroid 24 having a shape corresponding to half the ball 15 is formed at an end of a coupling cord 23 which is made of the same material as the cord 14, and a second fitting part 25 is formed at the other end. The interval between the hemispheroid 24 and the second fitting part 25 is the same as the interval between the balls 15.

The hemispheroid 24 and the second fitting part 25 are outsert-molded from the same material as the balls 15 at both ends of the coupling cord 23.
The base end of the second fitting part 25 is formed in a hemispheroid similar to an end of the ball 15. Formed at the front end of the second fitting part 25 is a fitting hole 26. The deep portion of the fitting hole 26 is formed with a diameter larger than an opening portion. As shown in Fig. 6, this diameter allows the swelled portion 22a of the fitting protrusion 22 to be resiliently fitted into the fitting hole 26 and held therein.

The fitting hole 26 is formed with a depth which is a half or less of than the length of the second fitting part 25, and the fitting protrusion 22 protrudes by a length equal to the depth of the fitting hole 26.
The force of the fitting hole 26 for holding the fitting protrusion 22 is set to a magnitude that prevents the fit between the fitting protrusion 22 and fitting hole 26 from being broken by a normal pull force applied to the ball chain 9 in a usual slat elevation operation and a slat angle adjustment operation. Only when a great pull force exceeding a normal pull force is applied to the ball chain 9, the fit between the fitting protrusion 22 and the fitting hole 26 is broken due to the resiliency of the synthetic resin.

The fitting hole 26 is formed by forming a hemispheroid similar to the hemispheroid 24 at the other end of the coupling cord 23 and then hollowing out the center of the front end of the hemispheroid by cutting. As shown in Figs. 2 and 6, the first and second fitting parts are formed in such a manner that an external shape thereof is the same as that of the ball 15 in a state where the fitting protrusion 22 is fitted in the fitting hole 26.

The fitting hole 26 is formed with a depth smaller than half the length of the second fitting part 25, and the base end of the second fitting part 25 is formed as a solid body. Thus, a sufficient length of the coupling cord 23 can be embedded in the second fitting part 25.

The hemispheroids 20, 24 of the first coupling member 17 and the second coupling member 18 are fixed to the hemispheroids 15a formed on both ends of the cord 14, forming balls of the same shape as the ball 15. When the fitting protrusion 22 is fitted into the fitting hole 26, the ball chain 9 is formed as being endless.

In the ball chain 9 thus configured, balls of the same shape are formed at regular intervals along the total length of the cord 14 of the ball chain 9 and the coupling cords 19, 23 of the coupling member 16. Therefore, the ball chain 9 can be rotated around the pulley 12 unlimitedly.

The ball chain thus configured can show the following effects.
(1) Balls of the same shape are formed at regular intervals along the total length of the cord 14 of the ball chain 9 and the coupling cords 19, 23 of the coupling member 16. Therefore, the ball chain 9 can be rotated around the pulley 12 unlimitedly to perform a slat elevation operation.
(2) When a great pull force exceeding a normal pull force is applied to the ball chain 9, the fit between the fitting protrusion 22 and the fitting hole 26 of the coupling member 16 is broken. Accordingly, it is possible to provide a fail-safe function of, when the endless edge of the ball chain 9 is caught on a dweller or another mobile object moving in the room, cutting the ball chain 9 to ensure the safety of the dweller and prevent damage to such as the pulley 12 with which the ball chain 9 is engaged.
(3) By refitting the fitting protrusion 22 of the coupling member 16 into the fitting hole 26 thereof after the fit therebetween is broken, the ball chain 9 can be easily reconstructed as being endless.
(4) The round shank-shaped fitting protrusion 22 formed on the hemispheric first fitting part 21 is configured to be a solid body as a whole, including the front end thereof, and to be fitted into the fitting hole 26 drilled in the hemispheric second fitting part 25. Thus, a holding force for holding the fitting protrusion 22 in the fitting hole 26 can be obtained.
(5) The chamfered edges 22b formed at the front end of the swelled portion 22a allow the swelled portion 22a to be easily fitted into the fitting hole 26. The chamfered edges 22b also can prevent damage to the opening portion of the fitting hole 26 during fitting of the swelled portion 22a into the fitting hole 26.
(6) A sufficient length of the coupling cord 23 can be embedded in the second fitting part 25. Accordingly, sufficient joining strength can be obtained between the second fitting part 25 and the coupling cord 23.
(7) As shown in Fig. 3, the first fitting part 21 is outsert-molded as a solid body in such a manner that the coupling cord 19 is embedded in the entire first fitting part 21, including the front and base ends thereof. Accordingly, sufficient joining strength can be obtained between the first fitting part 21 and the coupling cord 19.
(8) The second fitting part 25 and the coupling cord 23 are joining together over half or more the length of the second fitting part 25. Accordingly, joining strength can be obtained between the second fitting part 25, outsert-molded on the coupling cord 23, and the coupling cord 23.

### (Method for Manufacturing Ball Chain 9)

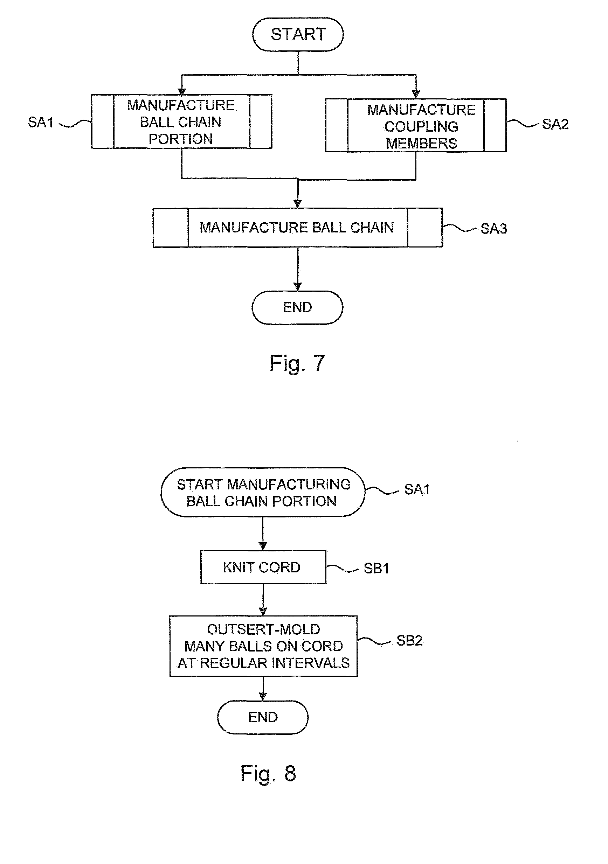

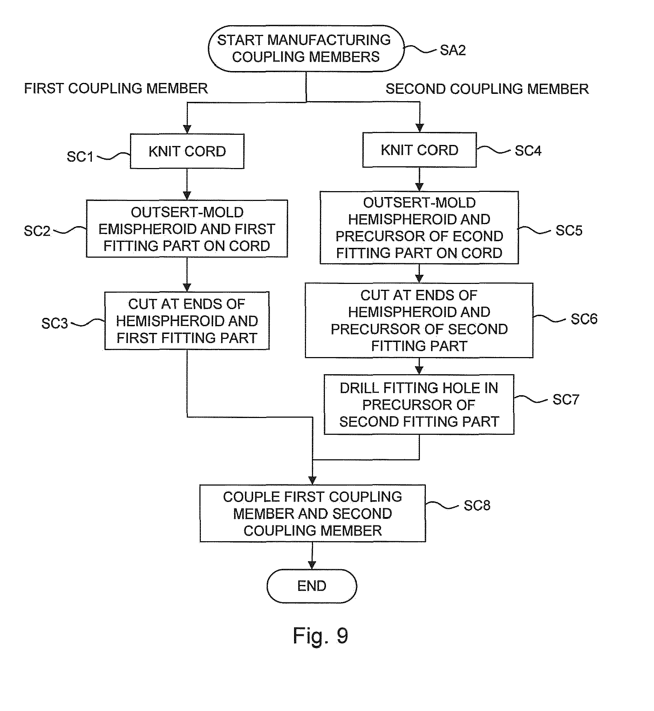

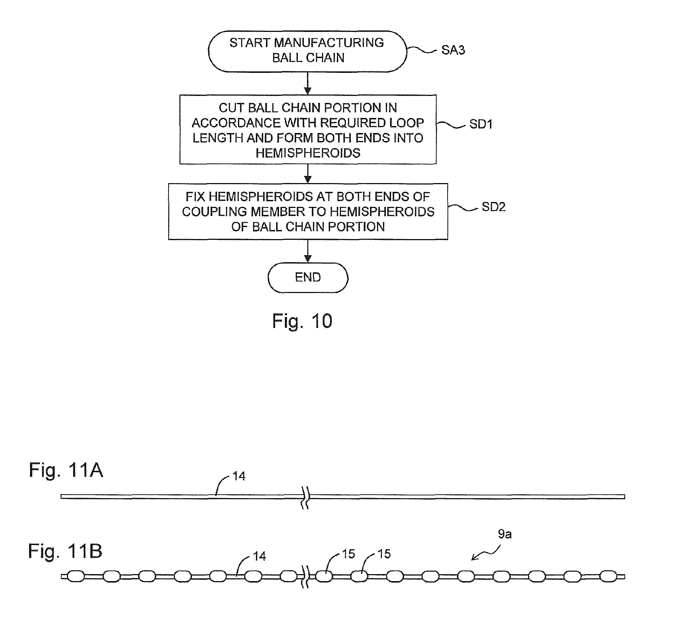

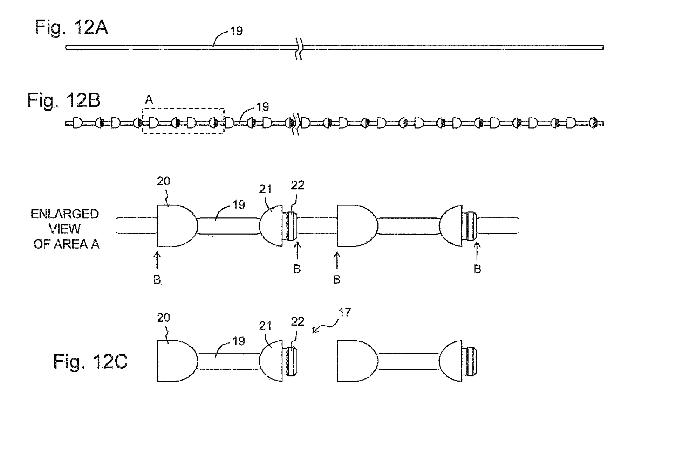

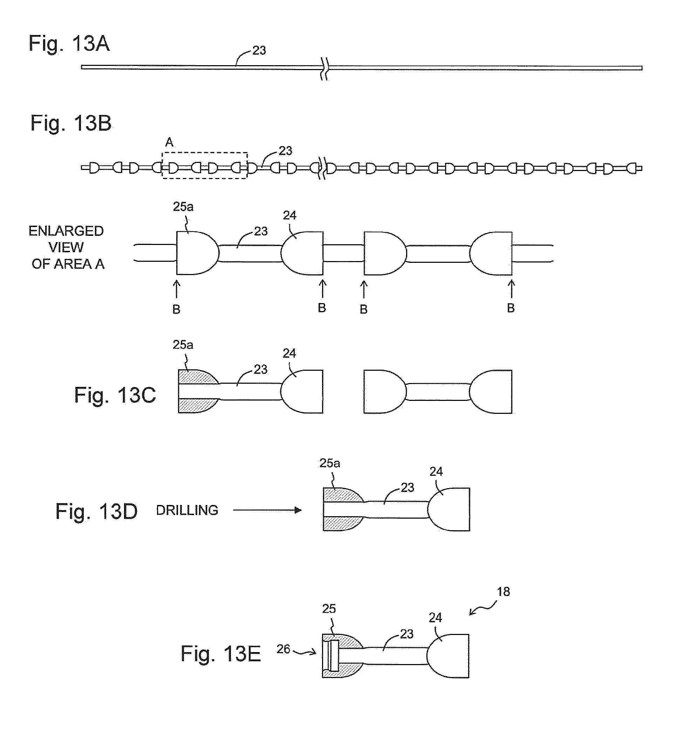

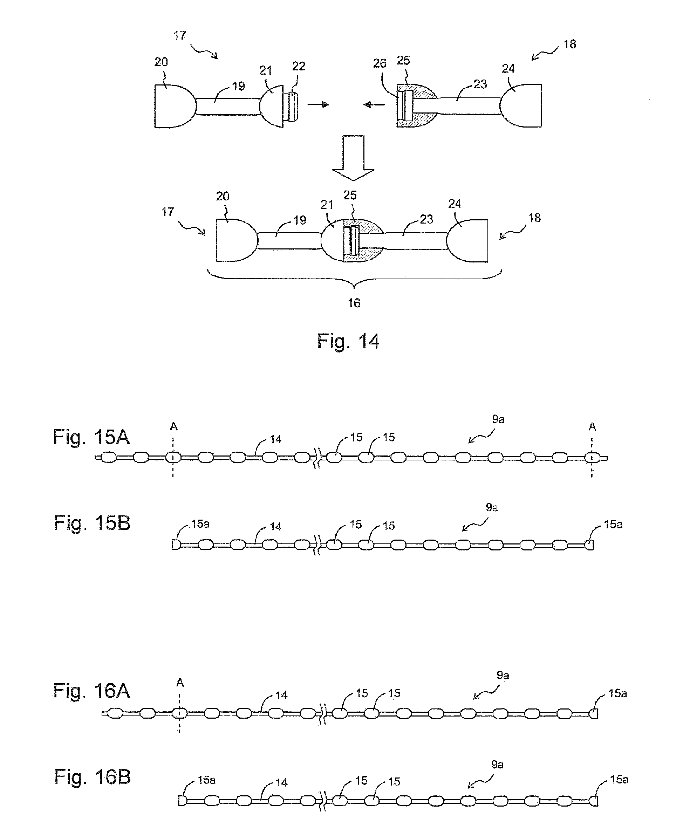

Referring now to Figs. 7 to 16, a method for manufacturing the ball chain 9 according to this embodiment will be described. Fig. 7 is a flowchart showing an overall process of manufacturing the ball chain 9. Fig. 8 is a flowchart showing a process of manufacturing a ball chain portion 9a. Fig. 9 is a flowchart showing a process of manufacturing the coupling member 16. Fig. 10 is a flowchart showing a process of coupling the ball chain portion 9a and the coupling member 16 to manufacture the ball chain 9. Figs. 11A and 11B are front views showing a ball chain portion 9a manufacturing process in step SA1. Figs. 12A to 11C are front views showing a process of manufacturing the first coupling member 17 of the coupling member 16. Figs. 13A to 13E are front views showing a process of manufacturing the second coupling member 18 of the coupling member 16. Fig. 14 is a front view showing a process of coupling the first coupling member 17 and the second coupling member 18. Figs. 15A and 15B are front views showing a process of cutting the ball chain portion 9a. Figs. 16A and 16B are front views showing another example of a process of cutting the ball chain portion 9a.

### (1) Manufacturing Ball Chain Portion 9a

The ball chain portion 9a is manufactured in step SA1. Specifically, step SA1 includes steps SB1 and SB2 shown in Fig 8. In step SB1, as shown in Fig. 11A, fiber such as polyester is knitted into the cord 14. In step SB2, as shown in Fig. 11B, many balls 15 are outsert-molded on the cord 14 at regular intervals, completing the manufacture of the ball chain portion 9a.

### (2) Manufacturing Coupling Member 16

In step SA2, the coupling member 16 is manufactured. Specifically, step SA2 includes steps SC1 to SC8 shown in Fig. 9. The coupling member 16 includes the first coupling member 17 and the second coupling member 18. Steps SC1 to SC3 relate to a process of manufacturing the first coupling member 17; steps SC4 to SC7 relate to a process of manufacturing the second coupling member 18; and step SC8 relates to a process of coupling the first coupling member 17 and the second coupling member 18.

### (2-1) Manufacturing First Coupling Member 17

In step SC1, as shown in Fig. 12A, fiber such as polyester is knitted into the cord 19. In step SC2, as shown in Fig. 12B, the hemispheroid 20 and the first fitting part 21 are outsert-molded on the cord 19. The first fitting part 21 includes the fitting protrusion 22, which is a solid body. In step SC3, the cord 19 is cut at respective edges of the hemisphere 20 and the first fitting part 21 (the positions of arrows B of Fig. 12B) to obtain a structure shown in Fig. 12C. Thus, the manufacture of the first coupling member 17 is completed.

### (2-2) Manufacturing Second Coupling Member 18

In step SC4, as shown in Fig. 13A, fiber such as polyester is knitted into the cord 23. In step SC5, as shown in Fig. 13B, the hemispheroid 24 and a precursor 25a of the second fitting part 25 are outsert-molded on the cord 23. In step SC6, the cord 23 is cut at respective edges of the hemispheroid 24 and the precursor 25a (the positions of arrows B of Fig. 13B) to obtain a structure shown in Fig. 13C. In step SC7, as shown in Fig. 13D, the precursor 25a is drilled to form the fitting hole 26. Thus, a structure shown in Fig. 13E is obtained, completing the manufacture of the second coupling member 18.

### (2-3) Coupling First Coupling Member 17 and Second Coupling Member 18

In step SC8, as shown in Fig. 14, forces are applied to the first coupling member 17 and the second coupling member 18 in directions shown by arrows. Thus, the fitting protrusion 22 of the first coupling member 17 and the fitting hole 26 of the second coupling member 18 are resiliently fitted together to obtain the coupling member 16. Thus, the manufacture of the coupling member 16 is completed.
According to the method of this embodiment, the first coupling member 17 and the second coupling member 18 are manufactured by outsert-molding many hemispheroids and fitting parts on a cord and then cutting the cord at appropriate positions. Thus, the first coupling members 17 and the second coupling member 18 can be easily mass-manufactured.

While the first coupling member 17 and the second coupling member 18 are coupled together to form the coupling member 16 in this embodiment, these coupling members need not necessarily be coupled together. That is, the step of coupling the first coupling member 17 and the second coupling member 18 (step SC8 in this embodiment) can be omitted.

### (3) Manufacturing Ball Chain 9

In step SA3, a looped ball chain 9, or ball chain 9 capable of being looped is manufactured. In the process of manufacturing the coupling member 16, a looped ball chain 9 is manufactured if the multiple coupling members constituting the coupling member 16 are coupled together; a ball chain 9 capable of being looped is manufactured if the coupling members are not coupled together.

Specifically, step SA3 includes steps SD1 and SD2 shown in Fig 10. In step SD1, the ball chain portion 9a is cut in such a manner that the loop length of the ball chain 9 becomes the desired length. In an example, the ball chain portion 9a is cut at two positions as shown by dotted lines A in Fig. 15A to obtain a structure as shown in Fig. 15B. The ball chain portion 9a is cut in such a manner that both ends thereof become hemispheroids 15a. In another example, a structure as shown in Fig. 16B may be obtained by previously forming an end of the ball chain portion 9a into a hemispheroid 15a during outsert molding as shown in Fig. 16A and, in step SD1, cutting the ball chain portion 9a at one position as shown by a dotted line A in Fig. 16A.

In step SD2, as shown in Fig. 2, the pair of hemispheroids 15a of the ball chain portion 9a and the pair of hemispheroids 20, 24 of the coupling member 16 are fixed to each other to obtain a looped ball chain 9 or ball chain 9 capable of being looped. Thus, the manufacture of the ball chain 9 is completed.

According to the method of this embodiment, a looped ball chain 9 or ball chain 9 capable of being looped is manufactured by cutting the ball chain portion 9a to adjust the length thereof and fixing the resulting ball chain portion 9a and the coupling member 16 to each other. Accordingly, if ball chain portions of one or several lengths are prepared, ball chains of various circumferential lengths can be manufactured. Thus, according to the method of this embodiment, ball chains of various circumferential lengths can be easily manufactured.

If the multiple coupling members constituting the coupling member 16 are not coupled together in the process of manufacturing the coupling member 16, there may be included a step of manufacturing the ball chain 9 by coupling the first coupling member 17 and the second coupling member 18 disposed at the ends of the ball chain 9. Further, the hemispheroids may be combined using methods (swaging, sewing, and like) other than fixing (welding, bonding).

### (Second Embodiment)

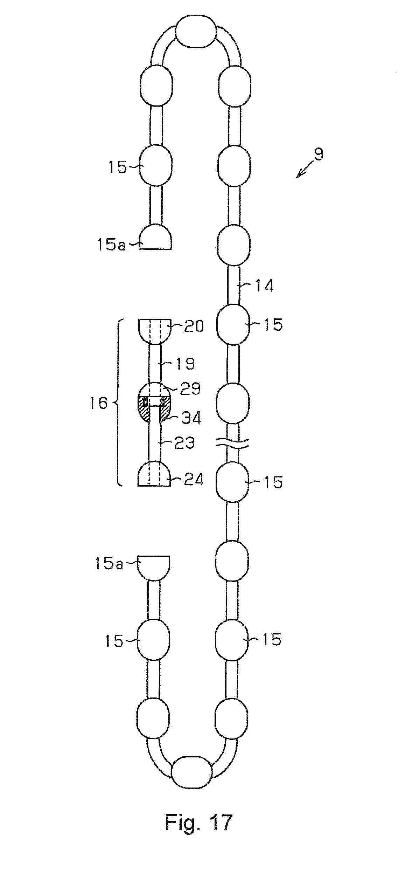

Figs. 17 to 25 show a second embodiment of the ball chain 9.

As shown in Fig. 17, in the ball chain 9, the balls 15 of a synthetic resin are molded at regular intervals on the cord 14 of polyester. The balls 15 are prolate spheroidal solid bodies molded on a surface of the cord 14 by a molding machine and are immovably fixed to the cord 14. Both ends of the cord 14 are coupled together using the coupling member 16 to form the endless ball chain 9.

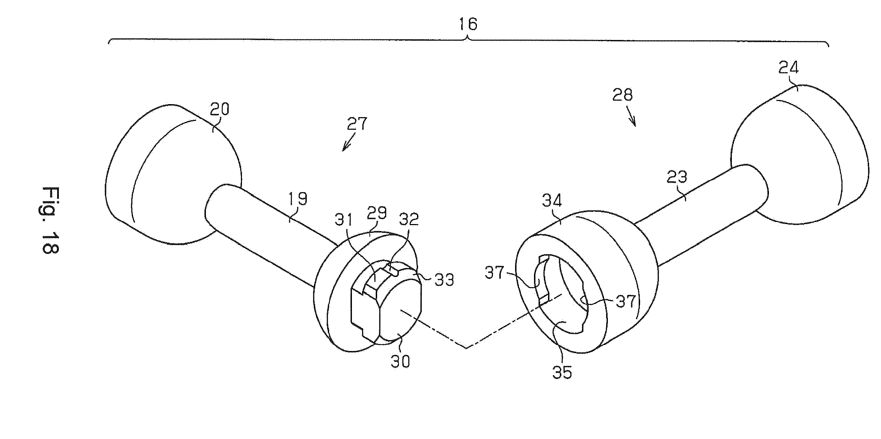

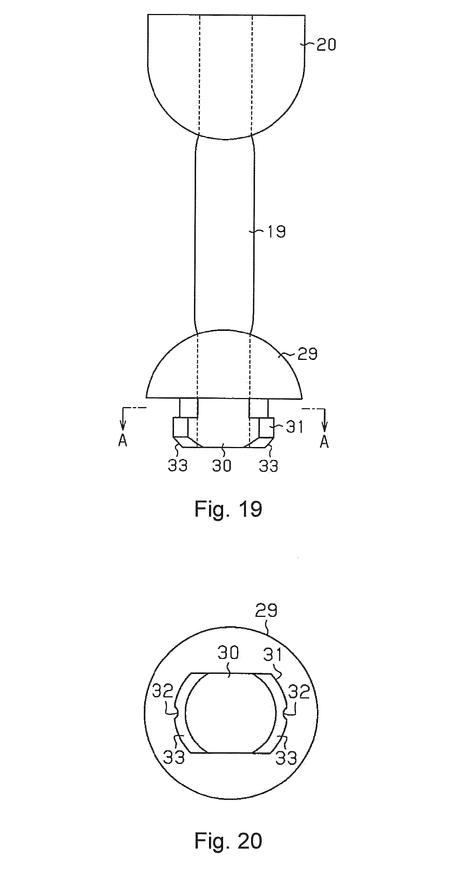

As shown in Fig. 18, the coupling member 16 includes a first coupling member 27 and a second coupling member 28. As shown in Fig. 19, in the first coupling member 27, the hemispheroid 20 having a shape corresponding to half the ball 15 is formed at an end of the coupling cord 19 which is made of the same material as the cord 14, and a first fitting part 29 is formed at the other end. The interval between the hemispheroid 20 and the first fitting part 29 is the same as the interval between the balls 15.

The hemispheroid 20 and the first fitting part 29 are formed of the same synthetic resin as that of the balls 15 at both ends of the coupling cord 19.
The base end of the first fitting part 29 is formed in a hemispheroid similar to that of an end of the ball 15. Formed at the front end thereof is a fitting protrusion 30 having a bale-shaped cross-section obtained by cutting off both sides of a round shank in parallel.

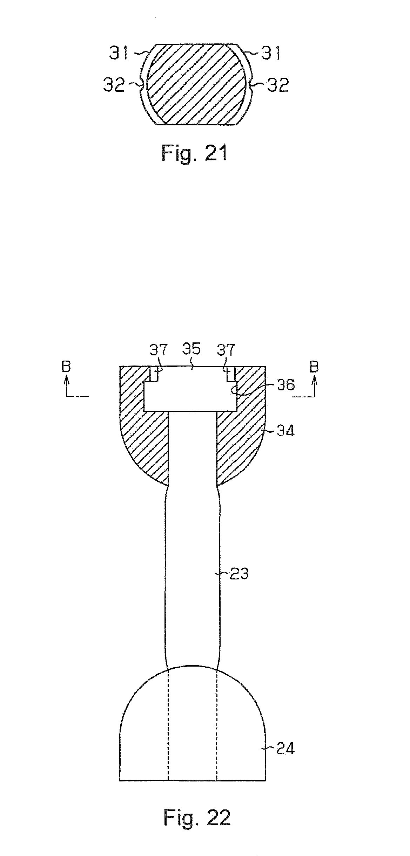

As shown in Figs. 20 and 21, swelled portions 31 formed by enlarging the diameter in the long axis direction of the bale shape are formed at an edge of the fitting protrusion 30. Troughs 32 are formed on the outer peripheral surfaces on both sides in the long axis direction of the swelled portions 31 in the axis direction of the first fitting part 29. Formed at the front end corners of the swelled portions 31 are chamfered edges 33.

As shown in Fig. 22, in the second coupling member 28, the hemispheroid 24 having a shape corresponding to half the ball 15 is formed at an end of the coupling cord 23 which is made of the same material as the cord 14, and a second fitting part 34 is formed at the other end. The hemispheroid 24 and the second fitting part 34 are molded from the same synthetic resin as that of the ball 15, and the interval between the hemispheroid 24 and the second fitting part 34 is the same as the interval between the balls 15.

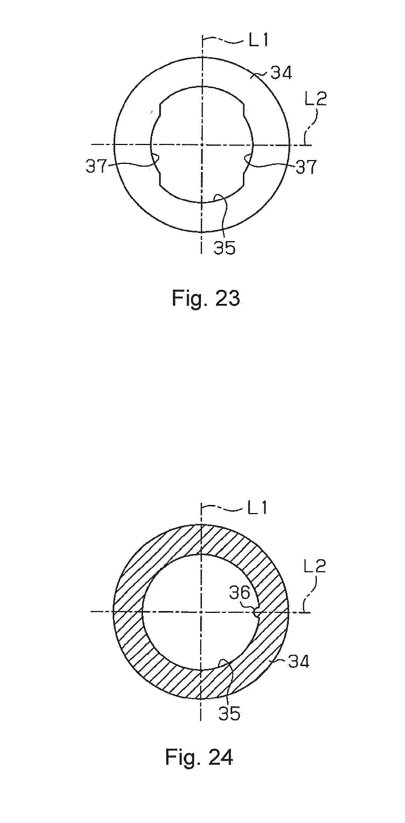

The hemispheroid 24 and the second fitting part 34 are formed of the same material as the balls 15 at both ends of the coupling cord 23.
The base end of the second fitting part 34 is formed in a hemispheroid shape similar to an end of the ball 15, and a fitting hole 35 is formed at the center of the front end surface of the second fitting part 34. As shown in Fig. 23, the fitting hole 35 has a bale-shaped opening into which the swelled portions 31 of the fitting protrusion 30 can be inserted.

As shown in Figs. 22 and 24, the deep portion of the fitting hole 35 is formed in a circle with a diameter which allows the fitting protrusion 30 to rotate within the fitting hole 35. Accordingly, locking portions 37 configured to engage with the swelled portion 31 are formed at the opening of the fitting hole 35 so as to be line-symmetrical. The opening edges of the locking portions 37 are gouged into arcs in order to allow the base end of the fitting protrusion 30 to rotate.

A ridge 36 which can engage with the trough 32 is formed on one side of the inner peripheral surface of the deep portion of the fitting hole 35. The ridge 36 is formed on a short axis L2 which intersects a long axis L1 of the opening of the fitting hole 35 at a right angle.

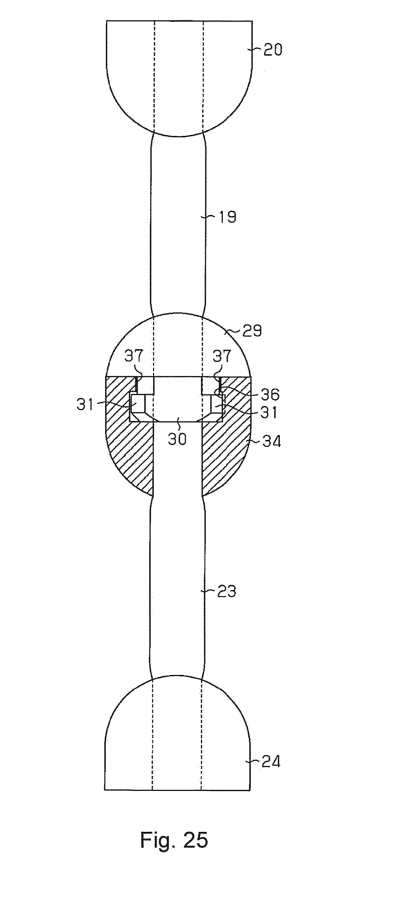

To couple the first fitting part 29 and the second fitting part 34 as described above, the swelled portion 31 of the fitting protrusion 30 is inserted into the fitting hole 35, and the first fitting part 29 is rotated by 90 degrees in either direction in this status. Thus, the trough 32 of the swelled portion 31 engages with the ridge 36 in the fitting hole 35, achieving positioning. As a result, as shown in Fig. 25, the swelled portion 31 engages with the locking portion 37 and is held within the fitting hole 35.

The force for holding this engagement is set to a magnitude that prevents the fit between the fitting protrusion 30 and fitting hole 35 from being broken by a normal pull force applied to the ball chain 9 in a usual slat elevation operation and a slat angle adjustment operation. Only when a great pull force exceeding the normal pull force is applied to the ball chain 9, the opening portion of the fitting hole 35 is enlarged by the resiliency of the synthetic resin and thus the swelled portion 31 is pulled out of the fitting hole 35. As a result, the fit between the fitting protrusion 30 and the fitting hole 35 is broken.

The first fitting part 29 and the second fitting part 34 are formed so that an external shape thereof is the same as that of the ball 15 in a state where the fitting protrusion 30 is fitted in the fitting hole 35. The hemispheroids 20, 24 of the first coupling member 27 and the second coupling member 28 are fixed to the hemispheroids 15a formed on both ends of the cord 14, forming balls of the same shape as the ball 15. When the fitting protrusion 30 is fitted in the fitting hole 35, the endless ball chain 9 is formed.

In the ball chain 9 thus configured, balls of the same shape are formed at regular intervals along the total length of the cord 14 of the ball chain 9 and the coupling cords 19, 23 of the coupling member 16. Therefore, the ball chain 9 can be rotated around the pulley 12 unlimitedly.

The ball chain thus configured can show the following effects.
(1) Balls of the same shape are formed at regular intervals along the total length of the cord 14 of the ball chain 9 and the coupling cords 19, 23 of the coupling member 16. Therefore, the ball chain 9 can be rotated around the pulley 12 unlimitedly to perform a slat elevation operation.
(2) When a great pull force exceeding a normal pull force is applied to the ball chain 9, the fit between the fitting protrusion 30 and the fitting hole 35 of the coupling member 16 is broken. Accordingly, when the endless edge of the ball chain 9 is caught on a dweller or another mobile object moving in the room, it is possible to cut the ball chain 9 to ensure the safety of the dweller and prevent damage to such as the pulley 12 with which the ball chain 9 is engaged.
(3) By refitting the fitting protrusion 30 into the fitting hole 35 after the fit therebetween of the coupling member 16 is broken, the ball chain 9 can be easily reconstructed as being endless.
(4) The configuration is adopted where the fitting protrusion 30 is fitted into the fitting hole 35 by inserting the swelled portion 31 of the fitting protrusion 30 into the fitting hole 35 and then rotating it by 90 degrees. As a result, it is possible to obtain a sufficient holding force to hold the fitting protrusion 30 within the fitting hole 35 while making the operation force for fitting the fitting protrusion 30 into the fitting hole 35 smaller than that in the first embodiment. The first fitting part 29 and the second fitting part 34 may be formed of a material having rigidity larger than a synthetic resin. In this case, the fail-safe function is not obtained. However, even when a great force is applied to the ball chain 9, the ball chain 9 is not unlooped and thus can be avoided from being unexpectedly unlooped.

### (Method for Manufacturing Ball Chain 9)

The ball chain 9 according to this embodiment can be manufactured through a process similar to that of the ball chain 9 according to the first embodiment. Note that, in step SC8 of Fig. 9 of the first embodiment, the fitting protrusion 22 of the first coupling member 17 is resiliently fitted into the fitting hole 26 of the second coupling member 18; in this embodiment, the fitting protrusion 30 can be fitted into the fitting hole 35 by inserting the fitting protrusion 30 into the fitting hole 35 and then rotating it. It is easier to couple the first coupling member 27 and the second coupling member 28 in this embodiment than in the first embodiment.

### (Third Embodiment)

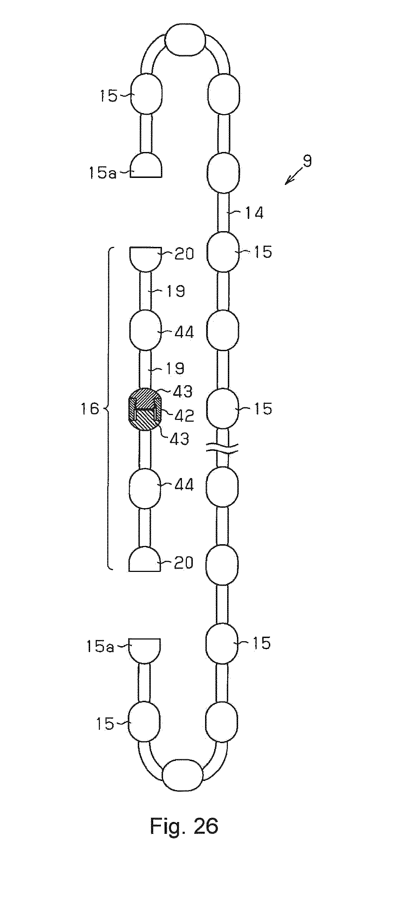

Figs. 26 to 41 show a third embodiment of the ball chain 9.

As shown in Fig. 26, in the ball chain 9, balls 15 of a synthetic resin are molded at regular intervals on the cord 14 of polyester. The balls 15 are prolate spheroidal solid bodies molded on a surface of the cord 14 by a molding machine and are immovably fixed to the cord 14. Both ends of the cord 14 are coupled together using the coupling member 16 to form the endless ball chain 9.

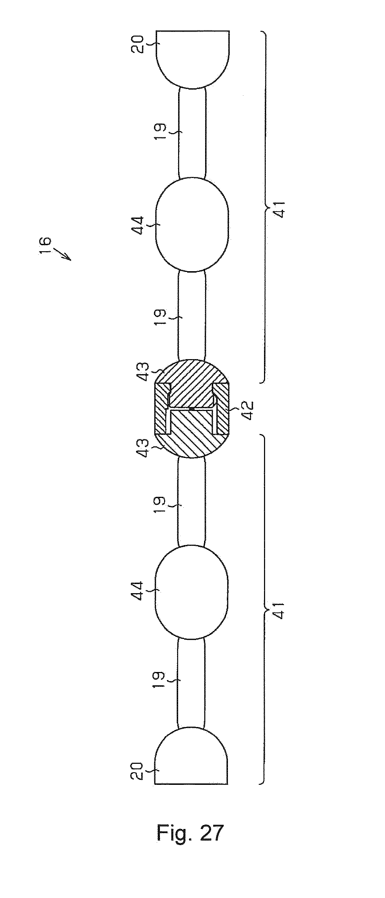

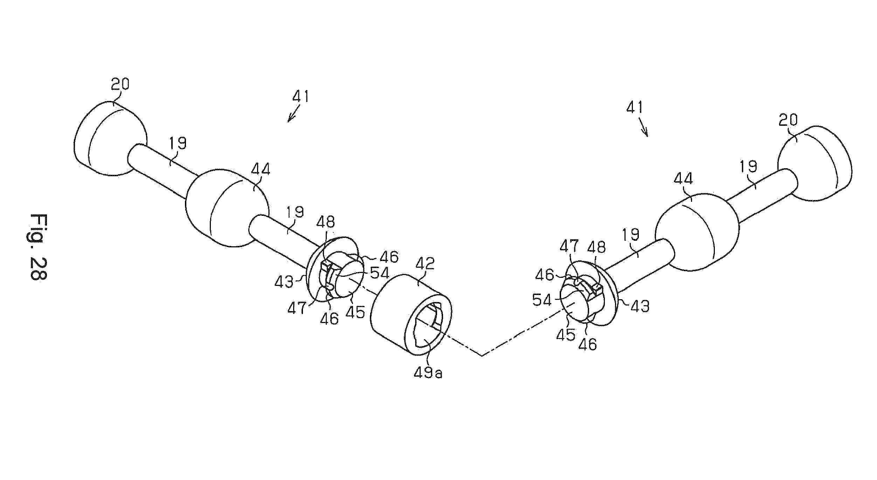

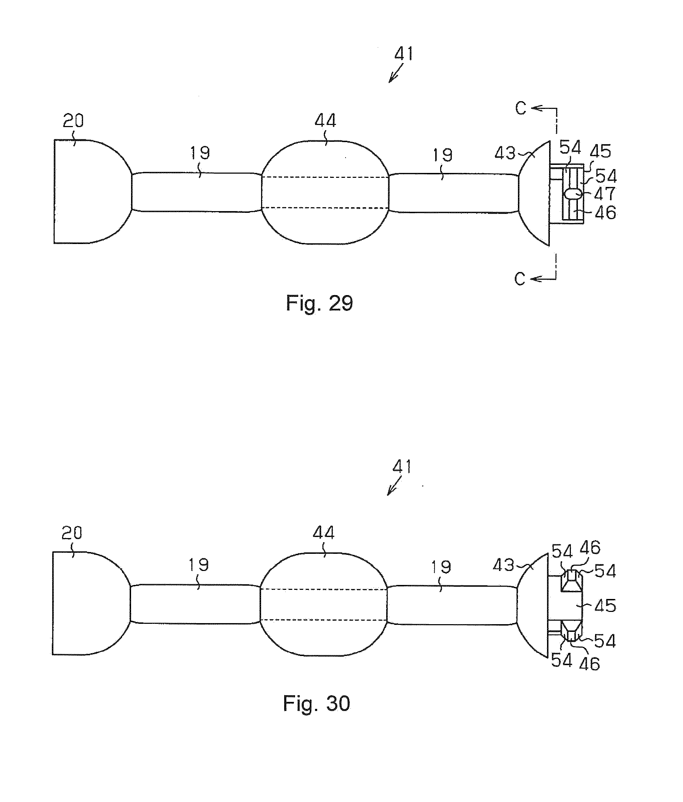

As shown in Figs. 27 and 28, the coupling member 16 has a configuration in which the two first coupling members 41 of the same structure are coupled together using a tubular second coupling member 42.
As shown in Fig. 29, in the first coupling member 41, the hemispheroid 20 having a shape corresponding to half the ball 15 is formed at an end of the coupling cord 19 which is made of the same material as the cord 14, and a first fitting part 43 is formed at the other end. A ball 44 of the same shape as the ball 15 is fixed between the hemispheroid 20 and the first fitting part 43. The interval between the first fitting part 43 and the ball 44 and the interval between the ball 44 and the hemispheroid 20 are the same as the interval between the balls 15.

The hemispheroid 20 and the first fitting part 43 are molded from the same material as the balls 15, 44 at both ends of the coupling cord 19.
The base end of the first fitting part 43 is formed in a hemispheroid similar to an end of the ball 15. Formed at the front end thereof is a round shank-shaped fitting protrusion 45.

As shown in Figs. 28 to 31, swelled portions 46 are formed on the outer peripheral surface of the front end of the fitting protrusion 45 so as to be line-symmetrical with respect to the center of the round shank. Formed in the middle of each swelled portion 46 is a locking trough 47 having a semicircular cross-section. Chamfered edges 54 are formed at the front and base ends of each swelled portion 46.

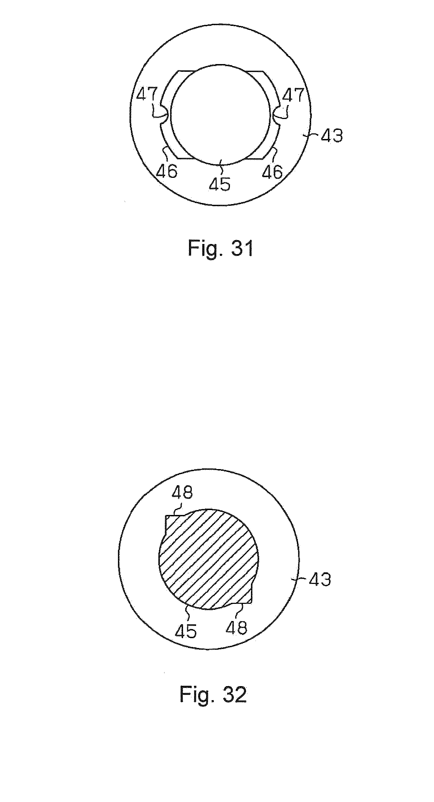

As shown in Figs. 28 and 32, rotation-restriction portions 48 are formed at the base end of the fitting protrusion 45 so as to protrude in radial directions of the round shank and to be line-symmetrical with respect to the center of the round shank. The rotation-restriction portions 48 are also formed at positions separated from the locking troughs 47 by 45 degrees in a circumferential direction with respect to the center of the round shank.

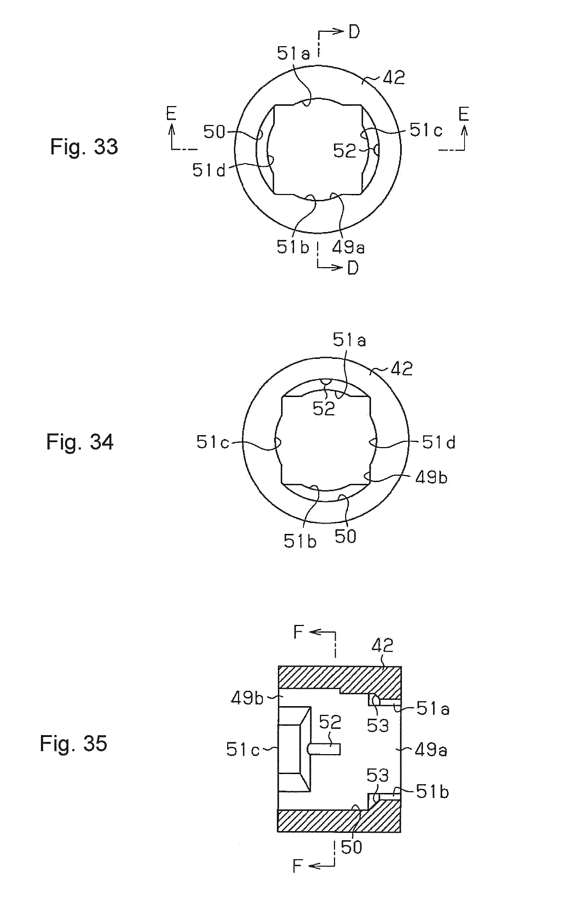

The second coupling member 42 is molded in a tubular shape from the same synthetic resin as that of the first fitting part 43 and the balls 15, 44. As shown in Figs. 33 and 34, opening portions 49a, 49b on both sides of the second coupling member 42 are formed in bale shapes into which the front ends of the fitting protrusions 45, including the swelled portions 46, can be inserted. The orientations of the bale shapes of the opening portions 49a, 49b are shifted from each other by 90 degrees with respect to the center of the tube.

A circular hole (fitting hole) 50 having a diameter which allows the front end of the fitting protrusion 45 to rotate is formed inside the second coupling member 42. Formed at opening edges in the short-axis direction of the bale shape of the opening portion 49a are locking portions 51 a, 51 b for preventing the swelled portion 46 from being pulled out of the circular hole 50. Formed at opening edges in the short-axis direction of the bale shape of the opening portion 49b are locking portions 51c, 51d for preventing the swelled portion 46 from being pulled out of the circular hole 50.

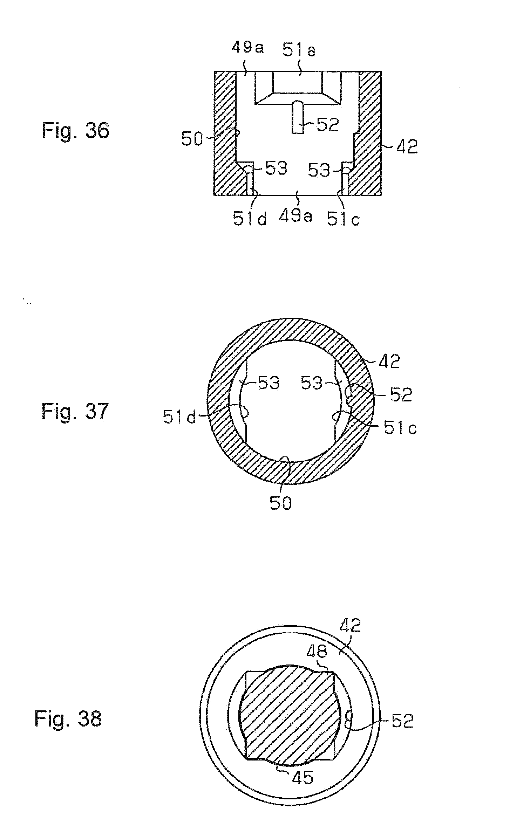

As shown in Figs. 35 and 36, chamfered edges 53 are provided on the boundaries between the locking portions 51a to 51d and the circular hole 50. When the fitting protrusion 45 is pulled out of the circular hole 50, the effects of the chamfered edges 53, 54 prevent damage to the locking portions 51a to 51d.

Ridges 52 configured to engage with the locking troughs 47 are formed on the inner peripheral surface of the circular hole 50 inside the locking portions 51a, 51c. To couple the first coupling member 41 and the second coupling member 42, the fitting protrusion 45 of the first fitting part 43 is inserted into the opening portion 49a of the second coupling member 42, and the first fitting part 43 is rotated by 90 degrees clockwise relative to the second coupling member 42. Thus, the locking troughs 47 of the swelled portion 45 become engaged with the locking protrusions 52 in the circular hole 50. As a result, the rotation-restriction portions 48 move from corners of the bale shape of the opening portion 49a to adjacent corners, achieving positioning as shown in Fig. 38.

Similarly, the other first coupling member 41 is positioned by inserting it into the other opening portion, 49b, of the second coupling member 42 and rotating it by 90 degrees. As a result, as shown in Fig. 27, the first coupling members 41 are coupled together via the second coupling member 42.

In this state, the swelled portions 46 of the fitting protrusions 45 of the first coupling members are engaged with the locking portions 51a to 51d of the second coupling member 42 and held within the circular hole 50 of the second coupling member 42.
The holding force for holding this engagement is set to a magnitude that prevents the fitting protrusion 45 from being disengaged from the second coupling member 42 by a normal pull force applied to the ball chain 9 in a usual slat elevation operation and a slat angle adjustment operation. Only when a great pull force exceeding the normal pull force is applied to the ball chain 9, the opening portions 49a, 49b of the second coupling member 42 are enlarged by the swelled portions 46 of the fitting protrusions 45 due to the resiliency of the synthetic resin of the second coupling member 42. Thus, the fitting protrusions 45 are disengaged from the second coupling member 42.

The second coupling members 42 and the first fitting part 43 are formed in such a manner that an external shape thereof in a state where the first fitting parts 43 are fitted in both sides of the second coupling member 42 is the same shape as the ball 15. The hemispheroids 20 of the first coupling members 41 are fixed to the hemispheroids 15a formed on both ends of the cord 14, forming balls of the same shape as the ball 15. By coupling the first coupling members 41 using the second coupling member 42, the ball chain 9 is formed as being endless.

In the ball chain 9 thus configured, balls of the same shape are formed at regular intervals along the total length of the cord 14 of the ball chain 9 and the coupling cord 19 of the coupling member 16. Therefore, the ball chain 9 can be rotated around the pulley 12 unlimitedly.

The ball chain thus configured can show the following effects.
(1) Balls of the same shape are formed at regular intervals along the total length of the cord 14 of the ball chain 9 and the coupling cord 19 of the coupling member 16. Therefore, the ball chain 9 can be rotated around the pulley 12 unlimitedly to perform a slat elevation operation.
(2) When a great pull force exceeding a normal pull force is applied to the ball chain 9, the fit between one of the fitting protrusions 41 and the second coupling member 42 of the coupling member 16 is broken. Accordingly, when the endless edge of the ball chain is caught on a dweller or another mobile object moving in the room, it is possible to divide the ball chain 9 at the coupling member 16 to ensure the safety of the dweller and prevent damage to such as the pulley 12 with which the ball chain 9 is engaged.
(3) By refitting the first coupling member 41 into the second coupling member 42 after the fit in the coupling member 16 is broken, the ball chain 9 can be easily reconstructed as being endless.
(4) The configuration is adopted where the fitting protrusions 45 are fitted into the second coupling member 42 by inserting them into the opening portions 49a, 49b of the second coupling member 42 and then rotating them by 90 degrees. Thus, it is possible to obtain a sufficient holding force to hold the fitting protrusions 45 in the second coupling member 42 while making the operation force for fitting the fitting protrusions 45 into the second coupling member 42 smaller than that in the first embodiment.
(5) The first coupling members 41 coupled via the second coupling member 42 are held in a state where the respective fitting protrusions 45 are shifted from each other by 90 degrees. Therefore, when a pull force is applied to the fitting protrusions 45, the swelled portions 46 of the fitting protrusion 45 work on the opening portions 49a, 49b of the second coupling member 42 so as to enlarge the opening portions 49a, 49b in directions which are shifted from each other by 90 degrees. Thus, a holding force can be easily ensured.
(6) When the fitting protrusion 45 is pulled out of the circular hole 50, the chamfered edges 53 can prevent damage to the locking portions 51a to 51d.
The above embodiment may be carried out in the following mode. •The first fitting part 43 and the second coupling member 42 may be formed of a material having rigidity larger than a synthetic resin. In this case, the fail-safe function is not obtained. However, even when a great force is applied to the ball chain 9, the ball chain 9 is not unlooped and thus can be avoided from being unexpectedly unlooped.
- In the first to third embodiments, the areas of the respective joining surfaces between the hemispheroids 15a and the hemispheroids 20, 24 may be increased by inclining the joining surfaces with respect to the respective axes of the hemispheroid 15a and the hemispheroids 20, 24.
- In the third embodiment, steps having a right-angle section may be formed in the second coupling member 42 in place of the chamfered edges 53.

### (Method for Manufacturing Ball Chain 9)

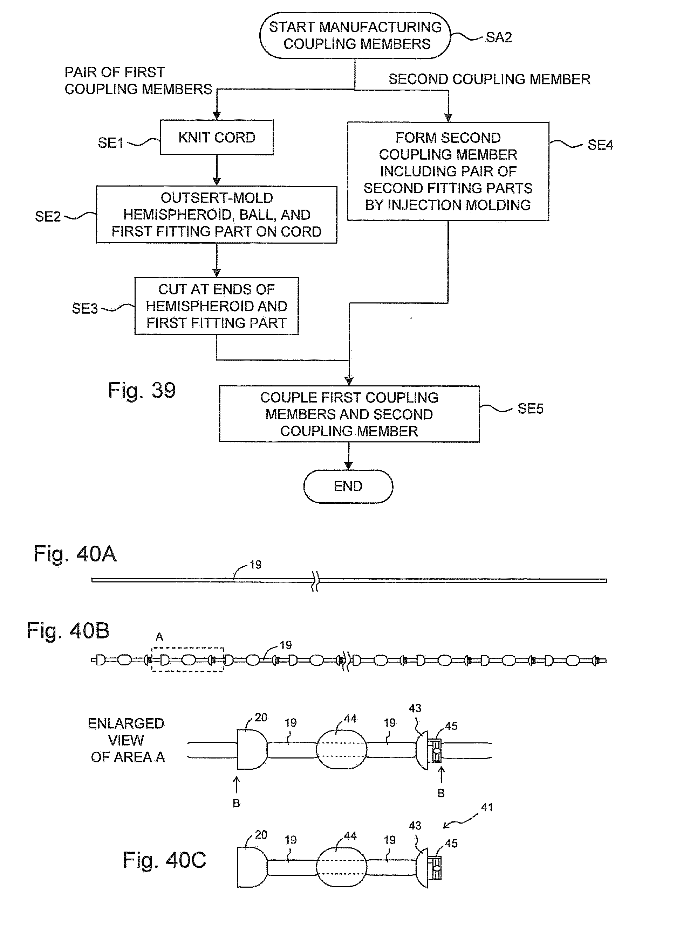

The ball chain 9 according to this embodiment can basically be manufactured through a process similar to that of the ball chain 9 according to the first embodiment. The coupling member 16 manufacturing process in step SA2 of Fig. 7 is performed using the following method.
Specifically, in this embodiment, step SA2 includes steps SE1 to SE5 shown in Fig. 39. The coupling member 16 includes the pair of first coupling members 41 and the single second coupling member 42. Steps SE1 to SE3 relate to a process of manufacturing the first coupling members 41; step SCE4 relates to a process of manufacturing the second coupling member 42; and the step SE5 relates to a process of coupling the first coupling members 41 and the second coupling member 42.

### (2-1) Manufacturing First Coupling Member 41

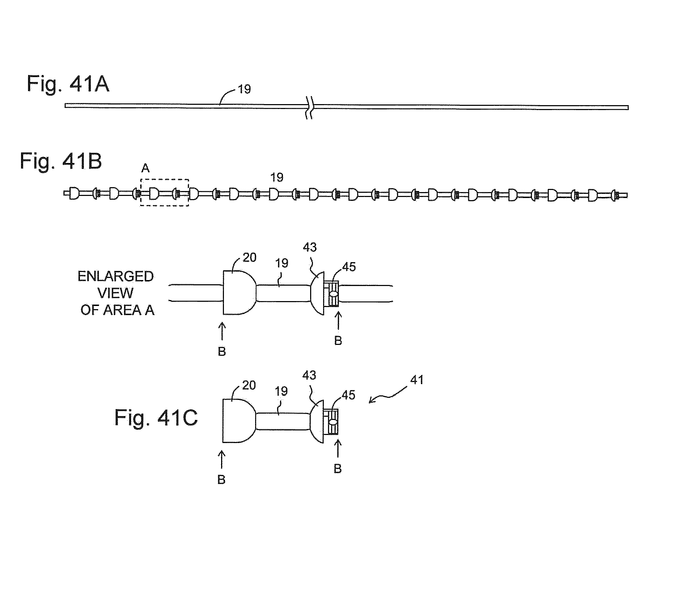

In step SE1, as shown in Fig. 40A, fiber such as polyester is knitted into the cord 19. In step SE2, as shown in Fig. 40B, the hemispheroids 20, the balls 44, and the first fitting parts 43 are outsert-molded on the cord 19. The first fitting parts 43 each include the fitting protrusion 45, which is a solid body. In step SE3, the cord 19 is cut at respective edges of a hemisphere 20 and a first fitting part 43 (the positions of arrows B of Fig. 40B) to obtain a structure shown in Fig. 40C. Thus, the manufacture of the first coupling member 41 is completed. The balls 44 may be each given a mark (called "cavity No.") for identifying a mold used to manufacture the first coupling members 41. The reason is that when a problem occurs with respect to the quality or the like of the first coupling member 41, it is easy to keep track of a mold used to manufacture the first coupling member 41. Note that the balls 44 can be omitted. In this case, the first coupling member 41 is manufactured as shown in Figs. 41A to 41C.

### (2-2) Manufacturing Second Coupling Member 42

In step SE4, the second coupling member 42 shown in Figs. 28 and 33 to 37 is manufactured by injection molding. The second coupling member 42 is a tubular member having the pair of opening portions 49a, 49b and includes a pair of second fitting parts having the fitting hole 50 provided with the locking portions 51a to 51d.

### (2-3) Coupling First Coupling Member 41 and Second Coupling Member 42

In step SE5, the first coupling members 41 and the second coupling member 42 are disposed as shown in Fig. 28, and one first coupling member 41 is fixed to the second coupling member 42 by inserting the fitting protrusion 45 of the first coupling member 41 into the opening portion 49a of the second coupling member 42 and then rotating the fitting protrusion 45. Subsequently, the other first coupling member 41 is fixed to the second coupling member 42 by inserting the fitting protrusion 45 of the first coupling member 41 into the opening portion 49b of the second coupling member 42 and then rotating the fitting protrusion 45. Thus, as shown in Fig. 27, a structure where the pair of first coupling members 41 and the second coupling member 42 are fixed to each other is obtained, completing the manufacture of the coupling member 16.

While the first coupling members 41 and the second coupling member 42 are coupled together to form the coupling member 16 in this embodiment, these coupling members need not necessarily be coupled together. That is, the step of coupling the first coupling members 41 and the second coupling member 42 (step SC5 in this embodiment) can be omitted.

In the case where the multiple coupling members constituting the coupling member 16 are not coupled together in the process of manufacturing the coupling member 16, there may be included a step of manufacturing a looped ball chain 9 by coupling, via the second coupling member 42, the first coupling members 41 disposed at both ends of the ball chain 9 which is formed by fixing the coupling member 16 to the ball chain portion 9a and which can be looped.

### (Fourth Embodiment)

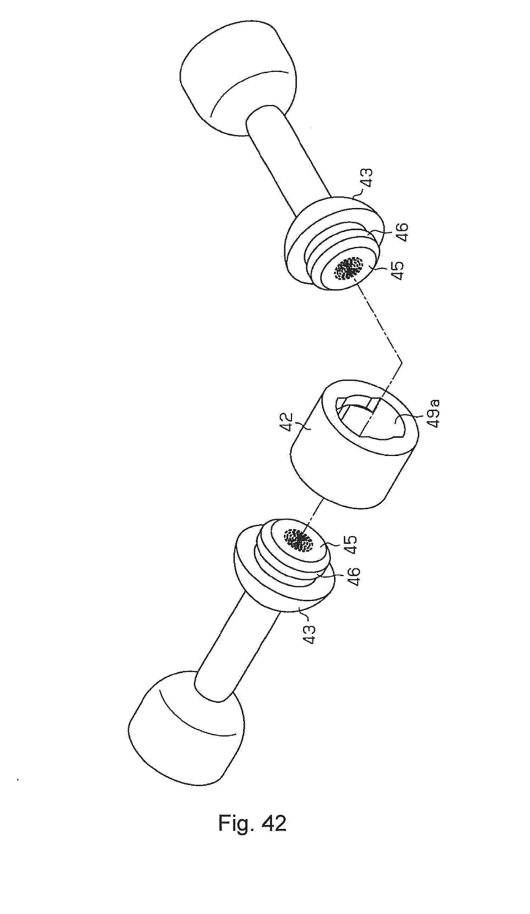

Fig. 42 shows the coupling member 16 of a fourth embodiment of the ball chain 9.
The configuration and manufacturing method of the ball chain 9 of this embodiment are similar to those of the third embodiment but differ therefrom in that the swelled portions 46 are provided along the entire outer peripheral surfaces of the fitting protrusions 45. The first coupling member 41 of this embodiment can be manufactured using the same method as that for the first coupling member 17 of the first embodiment. As in the first embodiment, the first coupling members 41 and the second coupling member 42 according to this embodiment can be coupled together by resiliently fitting the fitting protrusions 45 of the first coupling members 41 into the circular hole 50 of the second coupling member 42.

### (Fifth Embodiment)

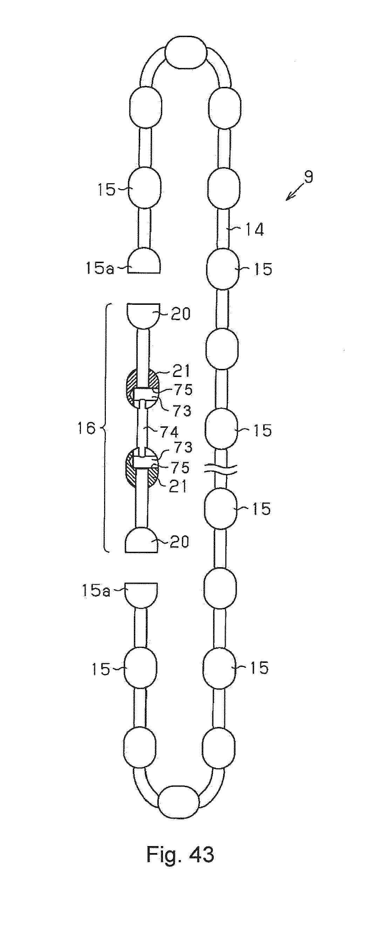

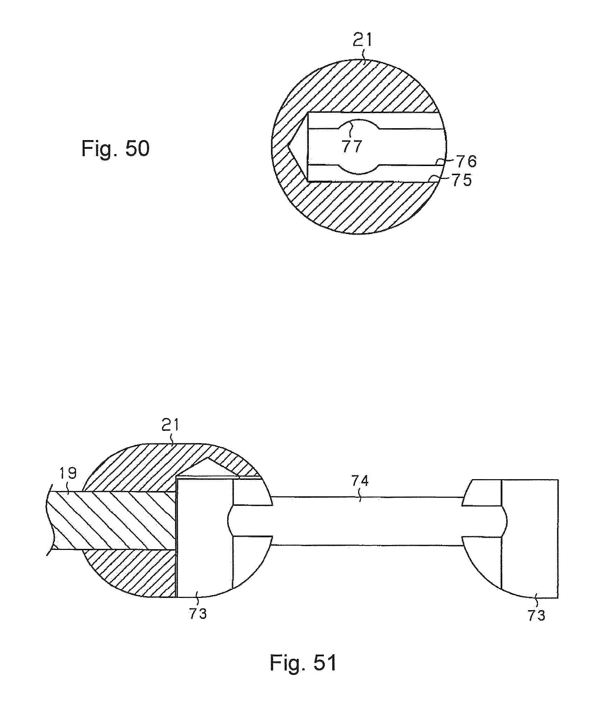

Figs. 43 to 53 show a fifth embodiment of the ball chain 9.
As shown in Fig. 43, in the ball chain 9, the balls 15 of a synthetic resin are molded at regular intervals on the cord 14 of polyester. The balls 15 are prolate spheroidal solid bodies molded on a surface of the cord 14 by a molding machine and are immovably fixed to the cord 14.

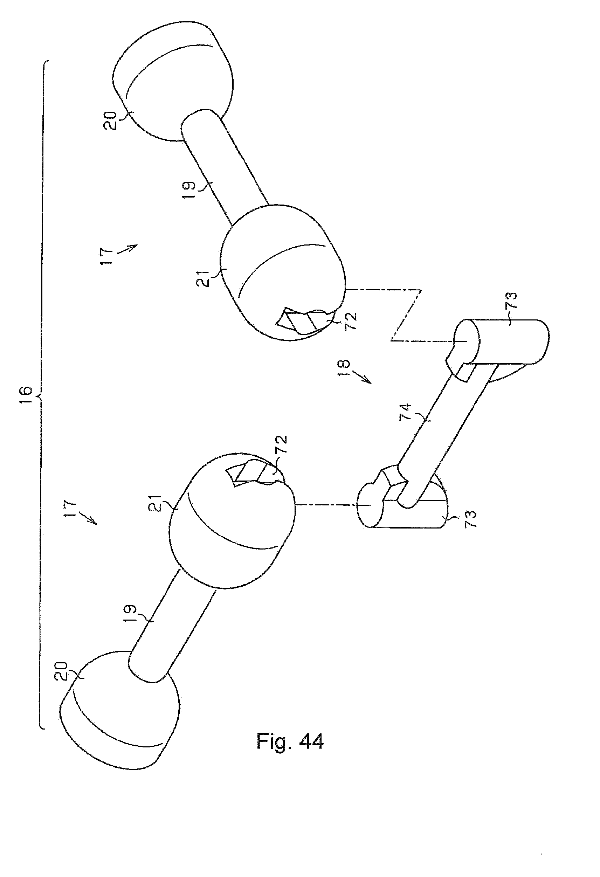

Both ends of the cord 14 are coupled together using the coupling member 16 to form the endless ball chain 9. As shown in Fig. 44, the coupling member 16 has a configuration where the two first coupling members 17 of the same structure are coupled together using the second coupling member 18.

In each of the first coupling members 17, the hemispheroid 20 having a shape corresponding to half the ball 15 is outsert-molded at an end of the coupling cord 19 of the same material as the cord 14, and the first fitting part 21 is formed at the other end. The interval between the first fitting part 21 and the hemispheroid 20 is the same as the interval between the balls 15.

The first fitting part 21 is formed by forming a fitting recess 72 on a ball of the same shape as the ball 15. The second coupling member 18 has a configuration where fitting protrusions 73 capable of being fitted into the fitting recesses 72 are provided at both ends of a shaft 74.

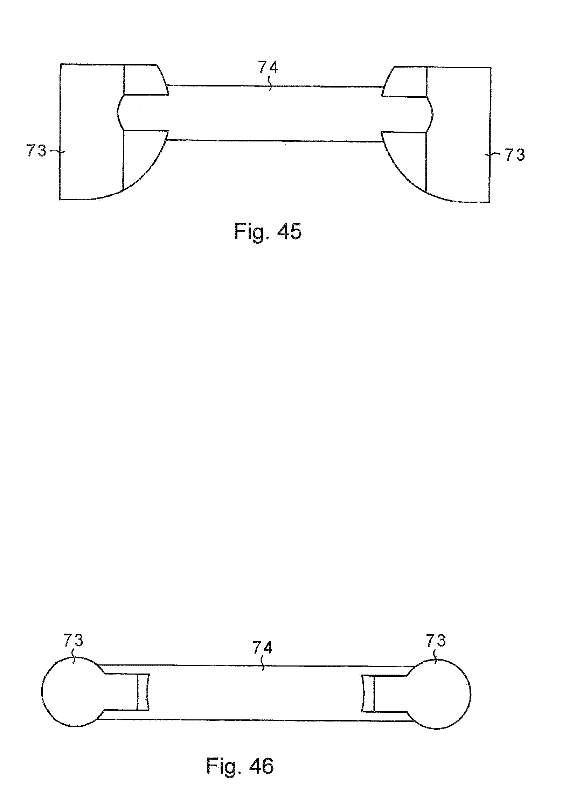

The second coupling member 18 is molded integrally from a synthetic resin. As shown in Fig. 45 and 46, the round shank-shaped fitting protrusions 73 are formed at both ends of the shaft 74 so as to be line-symmetrical and in such a manner that the central axes of the respective round shanks are perpendicular to the central axis of the shaft 74.

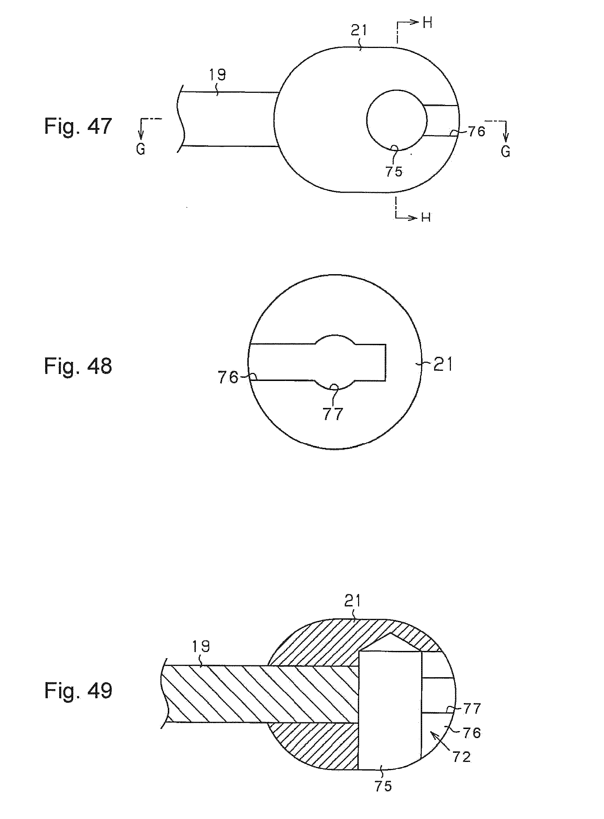

As shown in Figs. 47 to 50, in the fitting recess 72, a fitting hole 75 is formed in a direction perpendicular to the central axis of the coupling cord 19. The fitting hole 75 is formed with a diameter that allows the fitting protrusion 73 to be easily inserted into the fitting hole 75.

The fitting hole 75 has an opening toward the side opposite to the coupling cord 19 at an open groove 76 having a width smaller than the diameter of the fitting hole 75. Formed on the open groove 76 is an insertion hole 77 into which the shaft 74 of the second coupling member 18 can be inserted.

As shown in Fig. 44, in the first coupling member 17 and the second coupling member 18 thus configured, the first coupling members 17 are coupled together via the second coupling member 18 by inserting the fitting protrusions 73 of the second coupling member 18 into the fitting holes 75 of the first coupling members 17 in a direction perpendicular to the coupling cord 19.

In this state, the round shank-shaped fitting protrusions 73 are held in the fitting holes 75. That holding force is set to a magnitude that prevents the fitting protrusion 73 from being disengaged from the fitting hole 75 by a normal pull force applied to the ball chain 9 in a usual slat elevation operation and a slat angle adjustment operation. Only when a great pull force exceeding the normal pull force is applied to the ball chain 9, the open groove 76 is enlarged by the fitting protrusion 73 due to the resiliency of the synthetic resin of the first coupling member 17 and thus the fitting protrusion 73 is disengaged from the fitting hole 75.

The first fitting part 21 and the fitting protrusion 73 are formed so that an external shape of the first fitting part 21 having the fitting protrusion 73 fitted thereinto is approximately the same shape as the ball 15.
The hemispheroids 20 of the first coupling members 17 are fixed to the hemispheroids 15a outsert-molded on both ends of the cord 14, forming balls of the same shape as the ball 15. By coupling the first coupling members 17 using the second coupling member 18, the ball chain 9 is formed as being endless.

The ball chain according to this embodiment can show the following effects.
(1) Balls of the same shape are formed at regular intervals along the total length of the cord 14 of the ball chain 9 and the coupling cords 19 and the shaft 24 of the coupling member 16. Therefore, the ball chain 9 can be rotated around the pulley 12 unlimitedly to perform a slat elevation operation.
(2) When a great pull force exceeding a normal pull force is applied to the ball chain 9, the fit between the fitting protrusion 73 and the fitting hole 75 of the coupling member 16 is broken. Accordingly, it is possible to provide a fail-safe function of, when the endless edge of the ball chain 9 is caught on a dweller or another mobile object moving in the room, cutting the ball chain 9 to ensure the safety of the dweller and prevent damage to such as the pulley 12 with which the ball chain 9 is engaged.
(3) By refitting the fitting protrusion 73 into the fitting hole 75 after the fit therebetween of the coupling member 16 is broken, the ball chain 9 can be easily reconstructed as being endless.
(4) The configuration is adopted where the fitting protrusion 73 is inserted and fitted into the fitting recess 72 of the first coupling member 17 in a direction perpendicular to the extending direction of the coupling cord 19. As a result, it is possible to fit the fitting protrusion 73 into the first coupling member 17 by a slight operation force, as well as to obtain a sufficient holding force to hold the fitting protrusion 73 in the first coupling member 17.
(5) A tool or the like is not required when fitting the fitting protrusion 73 into the fitting hole 75. Accordingly, it is possible to easily perform an operation of assembling the ball chain 9 and an operation of refitting the fitting protrusion 73 into the fitting hole 75.

The above embodiment may be carried out in the following mode.
- The first fitting parts 21 and the second fitting part 18 may be formed of a material having rigidity larger than that of a synthetic resin. In this case, the fail-safe function is not obtained. However, even when a great force is applied to the ball chain 9, the ball chain 9 is not unlooped and thus can be avoided from being unexpectedly unlooped.
- The second coupling member 18 may be formed by molding the fitting protrusions 23 at both ends of a cord of the same material as the cord 14.
- A shank having a polygonal section may be used as the fitting protrusion 23 in place of a round shank. •The area of the coupling surface between the hemispheroid 15a and the hemispheroid 20 may be increased by inclining the coupling surface with respect to the axis of the hemispheroid 15a and the hemispheroid 20.
- The coupling member 16 having a fail-safe function may be provided on the intermediate portion of a hoisting cord which is suspended from the head box of a horizontal blind and coupled to the bottom rail, or on the intermediate portion of an operation cord. In this case, the coupling cords 19 of the first coupling members 17 are sewn on the ends of the hoisting cord or operation cord, and the first coupling members 17 are coupled together via the second coupling member 18. Alternatively, the cord 14 of the second embodiment is sewn on an end of the hoisting cord or operation cord, and the fitting protrusion 23 is fitted into the first fitting part 21.

### (Method for Manufacturing Ball Chain 9)

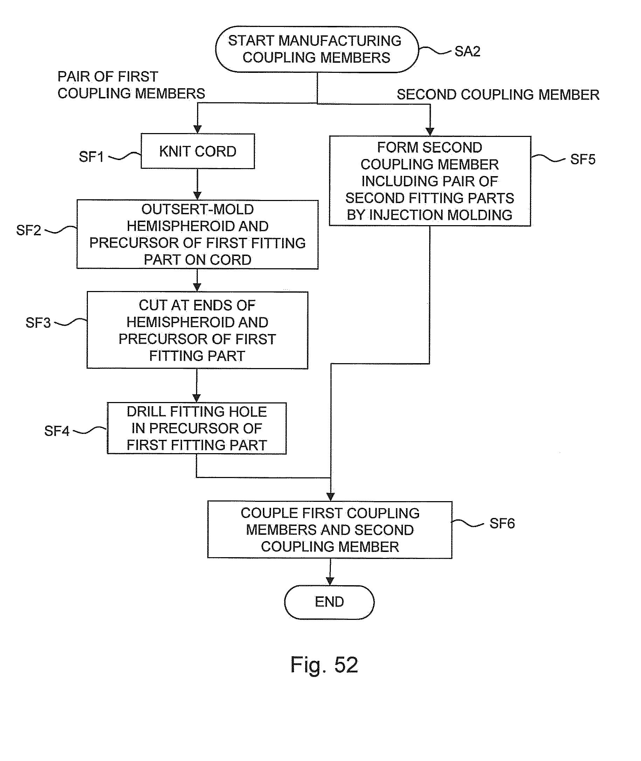

The ball chain 9 according to this embodiment can basically be manufactured through a process similar to that of the ball chain 9 according to the first embodiment. The coupling member 16 manufacturing process in step SA2 of Fig. 7 is performed using the following method.
Specifically, in this embodiment, step SA2 includes steps SF1 to SF6 shown in Fig. 52. The coupling member 16 includes the pair of first coupling members 17 and the single second coupling member 18. Steps SF1 to SF4 relate to a process of manufacturing the first coupling members 17; step SF5 relates to a process of manufacturing the second coupling member 18; and the step SF6 relates to a process of coupling the first coupling members 17 and the second coupling member 18.

### (2-1) Manufacturing First Coupling Members 17

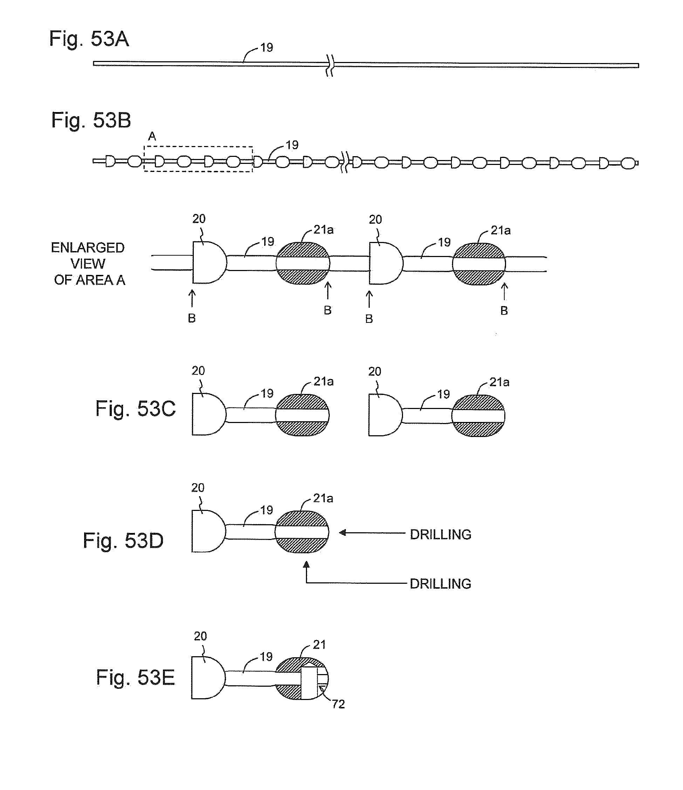

In step SF1, as shown in Fig. 53A, fiber such as polyester is knitted into the cord 19. In step SF2, as shown in Fig. 53B, the hemispheroids 20 and precursors 21a of the first fitting parts 21 are outsert-molded on the cord 19. In step SF3, the cord 19 is cut at respective edges of the hemispheroids 20 and the precursors 21 a of the first fitting parts 21 (the positions of arrows B of Fig. 53B) to obtain a structure shown in Fig. 5C. In step SF4, as shown in Fig. 53D, the first fitting parts 21 are formed by drilling the fitting holes 72 on the precursors 25a. Thus, a structure shown in Fig. 53E is obtained, completing of the manufacture of the first coupling members 17.

### (2-2) Manufacturing Second Coupling Member 18

In step SF5, the second coupling member 18 shown in Figs. 44 to 46 is manufactured by injection molding. The second coupling member 18 includes the shaft 74 and the fitting protrusions 73 provided at both ends of the shaft 74. The fitting protrusions 23 and the shaft 24 may be integrally molded from synthetic resins having different rigidities. In this case, a hard synthetic resin is used for the fitting protrusions 23, and a soft synthetic resin is used for the shaft 24.

### (2-3) Coupling First Coupling Members 17 and Second Coupling Member 18

In step SF6, the first coupling members 17 and the second coupling member 18 are disposed as shown in Fig. 44, and one first coupling member 17 is fixed to the second coupling member 18 by inserting one fitting protrusion 73 of the second coupling member 18 into the fitting recess 72 of the first coupling member 17. Subsequently, the other first coupling member 17 is fixed to the second coupling member 18 by inserting the other fitting protrusion 73 of the second coupling member 18 into the fitting recess 72 of the first coupling member 17. Thus, as shown in Fig. 43, a structure where the pair of first coupling members 17 and the second coupling member 18 are fixed to each other is obtained, completing the manufacture of the coupling member 16.

While the first coupling members 17 and the second coupling member 18 are coupled together to form the coupling member 16 in this embodiment, these coupling members need not necessarily be coupled together. That is, the step of coupling the first coupling members 17 and the second coupling member 18 (step SF6 in this embodiment) can be omitted.
In the case where the multiple coupling members constituting the coupling member 16 are not coupled together in the process of manufacturing the coupling member 16, there may be included a step of manufacturing a looped ball chain 9 by coupling, via the second coupling member 18, the first coupling members 17 disposed at both ends of the ball chain 9 which is formed by fixing the coupling member 16 to the ball chain portion 9a and which can be looped.

### (Sixth Embodiment)

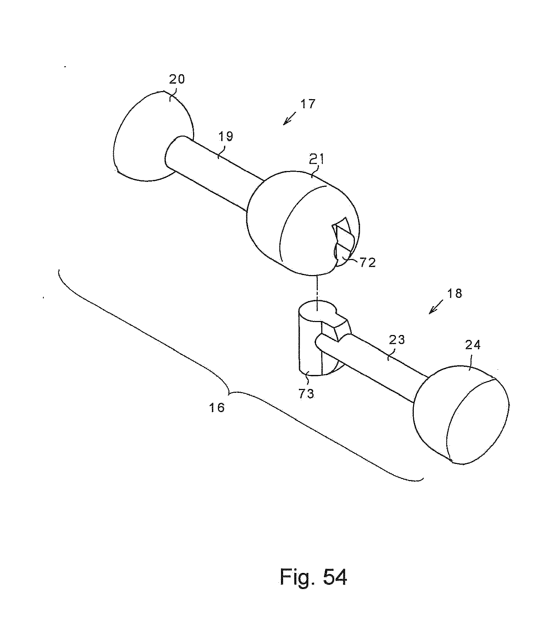

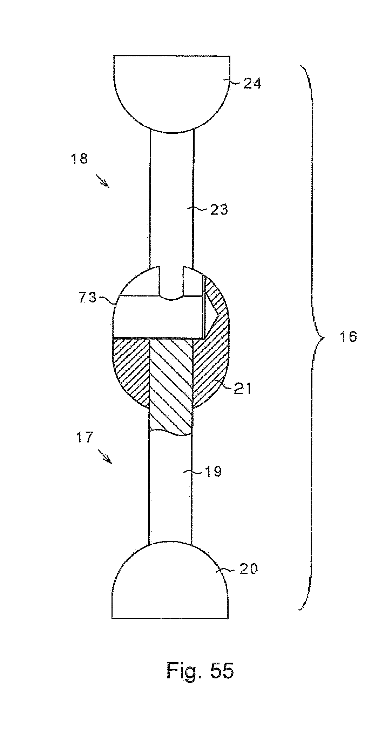

Figs. 54 and 55 show the coupling member 16 of a sixth embodiment of the ball chain 9.
The coupling member 16 of the ball chain 9 according to this embodiment is similar to that of the fifth embodiment in terms of the fitting structure between the first coupling member 17 and the second coupling member 18. However, the coupling member 16 of this embodiment includes two pieces: the first coupling member 17 having the fitting recess 72 and the second coupling member 18 having the fitting protrusion 73 configured to be fitted into the fitting recess 72. In this respect, the coupling member 16 of this embodiment is similar to that of the first embodiment and can be manufactured using a method similar to that of the first embodiment. Note that, in this embodiment, the first coupling member 17 has the fitting recess 72, and the second coupling member 18 has the fitting protrusion 73; accordingly, the second coupling member 18 is manufactured in steps SC1 to SC3 of Fig. 9, the first coupling member 17 is manufactured in steps SC4 to SC7, and then the first coupling member 17 and the second coupling member 18 are coupled together in step SC8.

### (Seventh Embodiment)

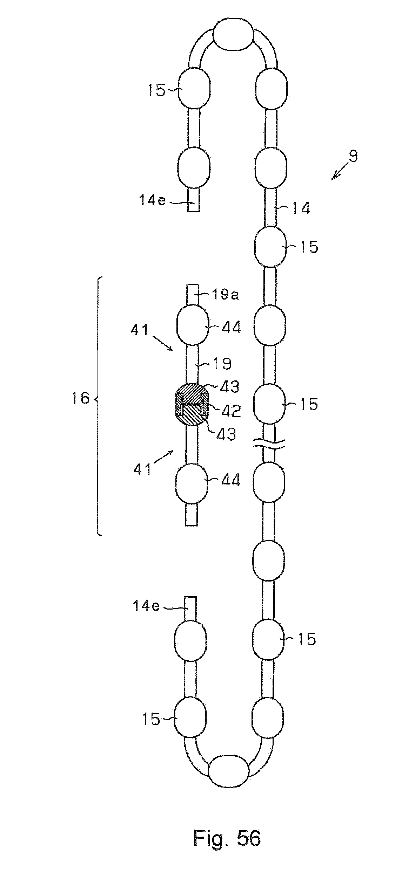

The ball chain 9 of a seventh embodiment of the present invention will be described with reference to Figs. 56 to 61.
The configuration and manufacturing method of the ball chain 9 of this embodiment is similar to those of the third embodiment but differs therefrom in that, while the hemispheroids 15a of the ball chain portion 9a and the hemispheroids 20 of the first coupling members 41 are coupled together in the third embodiment, coupling cords 14c of the ball chain portion 9a and coupling cords 19a of the first coupling members 41 are coupled together in this embodiment, as shown in Fig. 56. The fitting structure of the coupling member 16 of this embodiment is the same as that of the third embodiment. Hereafter, a method for manufacturing the ball chain 9 of this embodiment will be described.

### (Method for Manufacturing Ball Chain 9)

As with that of the third embodiment, the ball chain 9 of this embodiment can be manufactured in accordance with the flowchart shown in Fig. 7. Hereafter, portions different from the third embodiment will be mainly described.

### (1) Manufacturing Ball Chain Portion 9a

In step SA1, the ball chain portion 9a is manufactured. The ball chain portion 9a can be manufactured using the same method as the first embodiment (see Fig. 11).

### (2) Manufacturing Coupling Member 16

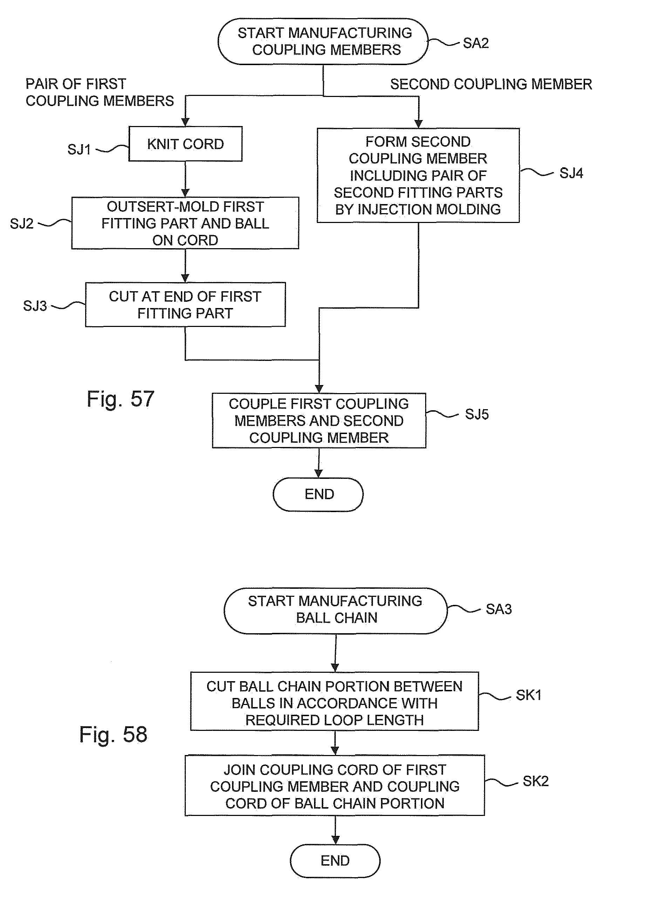

In step SA2, the coupling member 16 is manufactured. Specifically, step SA2 includes steps SJ1 to SJ5 shown in Fig. 57. The coupling member 16 includes the pair of first coupling members 41 and the single second coupling member 42. Steps SJ1 to SJ3 relate to a process of manufacturing the first coupling members 41; step SJ4 relates to a process of manufacturing the second coupling member 42; and the step SJ5 relates to a process of coupling the first coupling members 41 and the second coupling member 42.

### (2-1) Manufacturing First Coupling Members 41

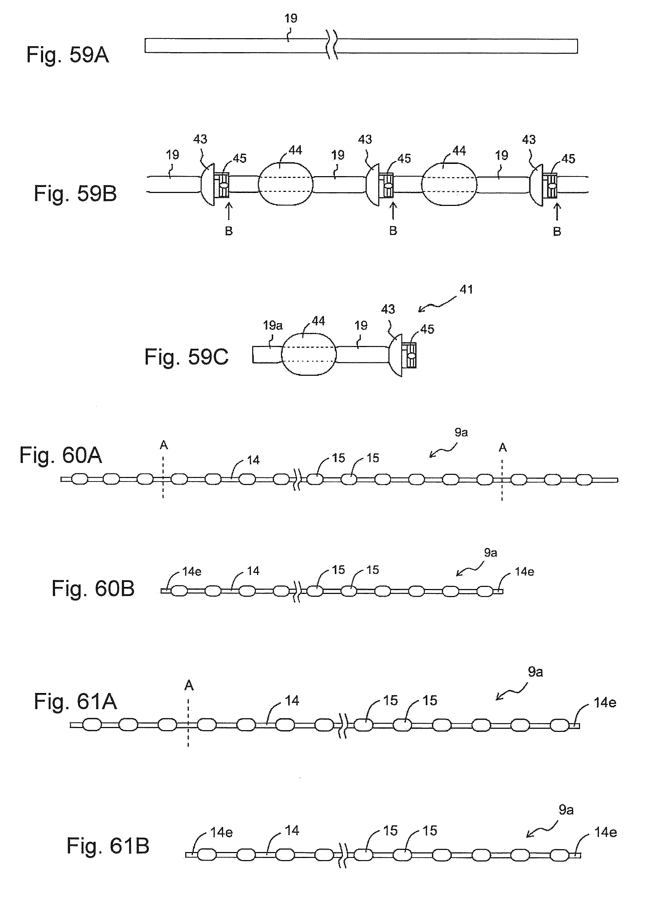

In step SJ1, as shown in Fig. 59A, fiber such as polyester is knitted into the cord 19. In step SJ2, as shown in Fig. 59B, the first fitting parts 43 and the balls 44 are outsert-molded on the cord 19. As shown in Fig. 59B, the length of the cord 19 between the front end of the fitting protrusion 45 of the first fitting part 43 and the coupling ball 44 is approximately half the distance between the adjacent two balls 15 on the cord 14. This portion serves as the coupling cord 19a of the first coupling member 41. The balls 44 can be omitted. In this case, the length of the cord 19 between the adjacent two first fitting parts 43 is set to a length of approximately half the distance between the adjacent two balls 15 on the main cord 14. In step SJ3, the cord 19 is cut at edges of the first fitting parts 45 (the positions of arrows B of Fig. 59B) of the first fitting parts 43 to obtain a structure shown in Fig. 59C. Thus, the manufacture of the first coupling members 41 is completed.

### (2-2) Manufacturing Second Coupling Member 42

In step SJ4, the second coupling member 42 is manufactured. The second coupling member 42 can be manufactured using the same method as the third embodiment.

### (2-3) Coupling First Coupling Members 41 and Second Coupling Member 42

In step SJ5, the first coupling members 41 and the second coupling member 42 are coupled together. The coupling between the first coupling members 41 and the second coupling member 42 can be achieved using the same method as the third embodiment.

While the first coupling members 41 and the second coupling member 42 are coupled together to form the coupling member 16 in this embodiment, these coupling members need not necessarily be coupled together. That is, the step of coupling the first coupling members 41 and the second coupling member 42 (step SJ5 in this embodiment) can be omitted.

In the case where the multiple coupling members constituting the coupling member 16 are not coupled together in the process of manufacturing the coupling member 16, there may be included a step of manufacturing a looped ball chain 9 by coupling, via the second coupling member 42, the first coupling members 41 disposed at both ends of the ball chain 9 which is formed by coupling the coupling member 16 to the ball chain portion 9a and which can be looped.

### (3) Manufacturing Ball Chain 9

In step SA3, a looped ball chain 9, or ball chain 9 capable of being looped is manufactured. In the process of manufacturing the coupling member 16, a looped ball chain 9 is manufactured if the multiple coupling members constituting the coupling member 16 are coupled together; a ball chain 9 capable of being looped is manufactured if the coupling members are not coupled together.
Specifically, step SA3 includes steps SK1 and SK2 shown in Fig. 58. In step SK1, the ball chain portion 9a is cut near the midpoint between adjacent two balls so that the loop length of the ball chain 9 becomes the desired length. In an example, the ball chain portion 9a is cut at two positions as shown by dotted lines A of Fig. 60A to obtain a structure as shown in Fig. 60B. The ball chain portion 9a is cut in such a manner that coupling cords 14e having a length of approximately half the distance between adjacent two balls 15 are formed at both ends of the ball chain portion 9a. In another example, after forming an end of the ball chain portion 9a into the coupling cord 14e during outsert molding, the ball chain portion 9a, in step SK1, may be cut at one position as shown by a dotted line A of Fig. 61A to obtain a structure as shown in Fig. 61B.

In step SK2, the coupling cords 14e disposed at both ends of the ball chain portion 9a and the coupling cords 19a of the first coupling members 41 are coupled together. The coupling method is not limited to a particular one. The main cord 14 and the first coupling members 41 may be coupled together by inserting the coupling cord 14e and the coupling cord 19a into a known hollow, tubular swaging member and then swaging the swaging member in a state where the coupling cord 14e and an end surface of the coupling cord 19a are in contact with each other. By manufacturing in this way, a ball chain can be obtained where the balls 15 and the adjacent balls 44 are at a predetermined distance from each other just as the adjacent balls 15 are separated from each other. This joining may be performed using other methods such as welding, bonding, and sewing.

A looped ball chain 9 or a ball chain 9 capable of being looped is obtained through the above-mentioned steps, completing the manufacture of the ball chain 9.

In the case where the multiple coupling members constituting the coupling member 16 are not coupled together in the process of manufacturing the coupling member 16, there may be included a step of manufacturing a looped ball chain 9 by coupling, via the second coupling member 42, the first coupling members 41 disposed at both ends of the ball chain 9 which is formed by joining the coupling member 16 to the ball chain portion 9a and which can be looped.

### (Eighth Embodiment)

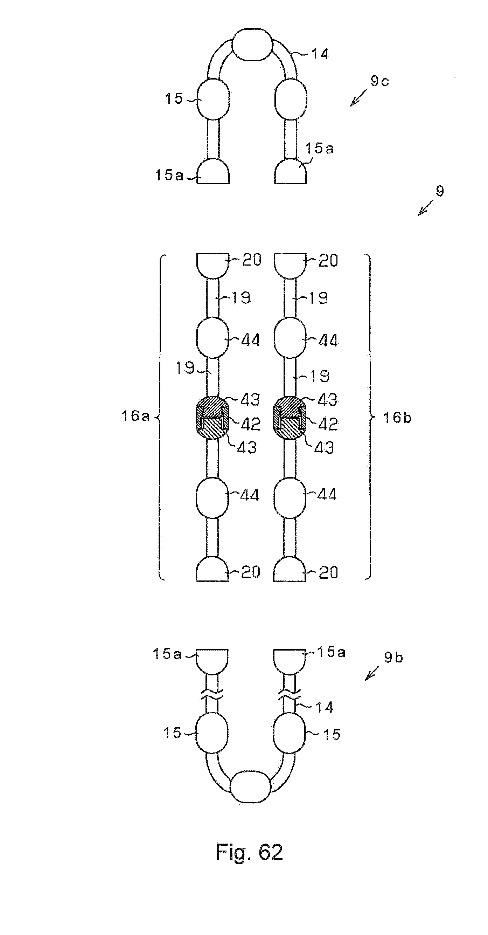

Figs. 62 to 67 show an eighth embodiment of the ball chain 9.
In the ball chain 9 of this embodiment, coupling members 16a, 16b have the same structure as the coupling member 16 of the third embodiment. However, the ball chain 9 of this embodiment differs from that of the third embodiment in that while the single coupling member 16 and the single ball chain portion 9a are fixed to each other to manufacture the ball chain 9 in the third embodiment, the two coupling members 16a, 16b are fixed to first and second ball chain portions 9b, 9c to manufacture a single ball chain in this embodiment.

Hereafter, this embodiment will be described in more detail.

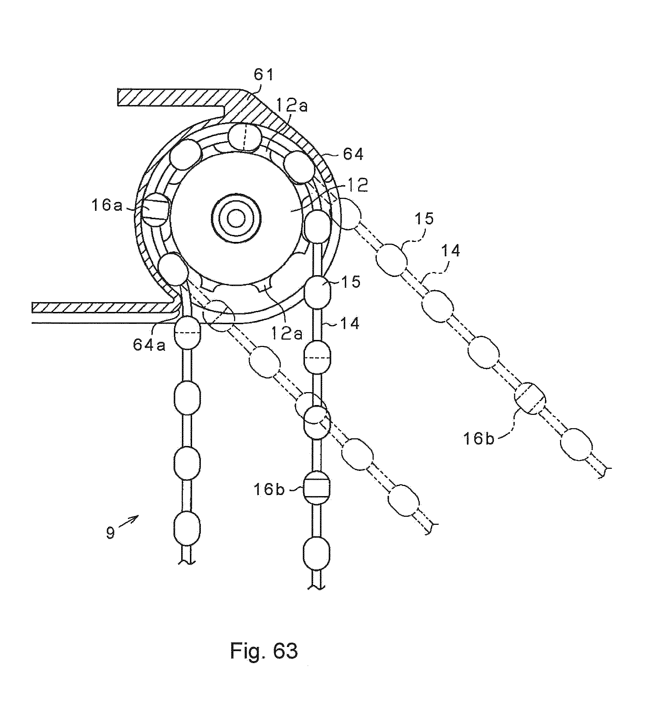

Fig. 63 shows an operation apparatus for a horizontal blind. In this operation apparatus, a pulley 12 is rotatably supported by a case 61 attached to an edge of a head box.

The endless ball chain 9 is engaged with the pulley 12. A guide 64 for preventing the ball chain 9 from dropping from the pulley 12 is formed on the case 61 so as to extend from over the pulley 12 to behind it.

Behind the ball chain 9, the bottom end of the guide 64 extends to near the bottom edge of the pulley 12 along the outer peripheral surface of the pulley 12, becoming a guide end 64a which protrudes with a beak-shaped section.

The ball chain 9 always hangs down from the pulley 12. During operation, one end of the ball chain 9 is pulled down, or down obliquely toward inside of the room, as shown by a chain line in Fig. 63. Rotations of the pulley 12 made by operating the ball chain 9 are transmitted to slats via a slat elevator and a slat angle adjustment apparatus disposed in the head box to raise or lower the slats or adjust the slat angle.

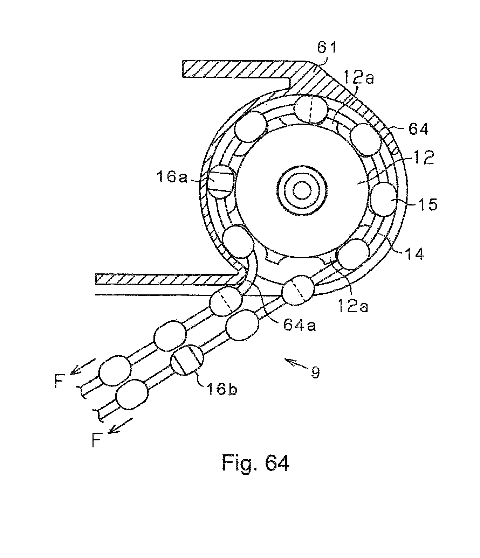

The ball chain 9 is formed as being endless by coupling it at two positions using the coupling members 16a, 16b. As shown in Figs. 63 and 64, the interval between the coupling members 16a, 16b is set such that when one of the coupling members 16a, 16b engages with the pulley 12, the other does not engage therewith. The coupling members 16a, 16b have the same configuration as the coupling member 16 of the third embodiment.

In the ball chain 9 thus configured, balls of the same shape are formed at regular intervals along the total length of the cord 14 and the coupling cords 19 of the coupling members 16a, 16b. Therefore, the ball chain 9 can be rotated around the pulley 12 unlimitedly.

Next, effects of a horizontal blind including the ball chain 9 thus configured will be described. As shown in Fig. 63, by operating the ball chain 9 suspended from the pulley 12 to rotate the pulley 12, the slats are raised or lowered, or rotated.

At this time, none of the coupling members 16a, 16b is engaged with the pulley 12, or as shown in Fig. 63, when one is engaged with the pulley 12, the other is not engaged with the 12.

If the endless edge of the ball chain 9 trips is caught on a dweller or another mobile object and, for example, the ball chain 9 is pulled down obliquely toward outside of the room as shown in Fig. 64, a pull force F works on both ends of the ball chain 9 in the direction of arrows.

At this time, if none of the coupling members 16a, 16b is engaged with the pulley 12, at least one of the coupling members 16a, 16b is divided. As shown in Fig. 64, in a state where the coupling member 16a is engaged with the pulley 12, the pull force F works on the guide edge 64a and a protrusion 12a of the pulley 12, but it is difficult for the pull force F to work on the coupling member 16a. Although the coupling member 16a is difficult to divide, the coupling member 16b is divided by the pull force F, since the coupling member 16b is not engaged with the pulley 12.

Similarly, when the coupling member 16b is engaged with the pulley 12, the coupling member 16a is not engaged with the pulley 12 and is therefore divided.

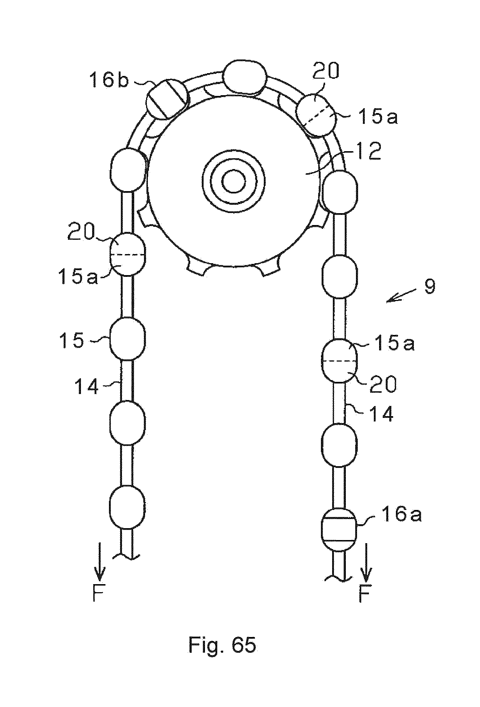

Fig. 65 shows a case where the ball chain 9 is not guided to below the pulley 12 by the guide 64, and the ball chain 9 is suspended from both sides of the outer peripheral portion of the pulley 12. In this case, the ball chain 9 is engaged with the pulley 12 with a length of approximately half the circumferential length of the pulley 12. Accordingly, the coupling members 16a, 16b are positioned away from each other by a distance exceeding half the circumferential length of the pulley 12. Thus, when the pull force F works on both ends of the ball chain 9 in the direction of arrows, one of the coupling members 16a, 16b is divided.

As shown in Fig. 62, the ball chain portion 9a is fixed to respective ends of the coupling members 16a, 16b, and a second ball chain portion 9b is fixed to the respective other ends thereof. A second ball chain portion 9c has a length exceeding half the circumferential length of the pulley 12. Accordingly, the interval between the coupling member 16a and the coupling member 16b exceeds half the circumferential length of the pulley 12.

The ball chain 9 thus configured can show the following effects.
(1) When a great pull force exceeding a normal pull force is applied to the ball chain 9, at least one of the coupling members 16a, 16b can be reliably divided. Accordingly, when the endless edge of the ball chain 9 is caught on a dweller or another mobile object moving in the room, it is possible to divide the ball chain 9 at at least one of the coupling members 16a, 16b to ensure the safety of the dweller and prevent damage to such as the pulley 12 with which the ball chain 9 is engaged.
(2) By making the interval between the coupling members 16a, 16b equal to or larger than the length of the ball chain 9 which is engaged with the pulley 12, at least one of the coupling members 16a, 16b can be divided when a large pull force works on the ball chain 9.
(3) The interval between the coupling members 16a, 16b when the ball chain 9 is pulled out of the pulley 12 through a guide member such as the guide end 64a is set to a length equal to or larger than the sum of the total length of the pulley 12 and the ball chain 9 which is engaged with the guide member from the pulley 12. Thus, when a large pull force works, at least one of the coupling members 16a, 16b can be divided.
(4) By making the interval between the coupling members 16a, 16b equal to or larger than the circumferential length of the pulley 12, at least one of the coupling members 16a, 16b can be divided when a large pull force works.
(5) Where the ball chain 9 is suspended from both sides of the outer peripheral portion of the pulley 12 as shown in Fig. 65, the hemispheroids 20 of the first coupling member 41 are welded to the hemispheroids 16a at the ends of the cord 15 in such a manner that the interval between the coupling members 16a, 16b is equal to or larger than half the circumferential length of the pulley 12. By adopting such a configuration, at least one of the coupling members 16a, 16b can be divided when a large pull force works.

The above embodiment may be carried out in the following mode.
- Three or more coupling parts may be provided, and the coupling parts may be disposed at regular intervals.
- If one of the coupling members 16a, 16b is positioned at the top of the pulley 12 and the other is positioned at the endless edge of the ball chain 9, a sufficient pull force may not work on any of the coupling parts when a dweller or another mobile object moving in the room trips on the endless edge. For this reason, the interval between the two coupling members 16a, 16b is preferably intervals other than half the total length of the ball chain 9.
- In the above-mentioned embodiment, the area of the joining surface between the hemispheroid 15a and the hemispheroid 20 may be increased by inclining the joining surface with respect to the axis of the hemispheroid 15a and the hemispheroid 20.

### (Method for Manufacturing Ball Chain 9)

The ball chain 9 according to this embodiment can basically be manufactured through a process similar to that of the ball chain 9 according to the first embodiment. The ball chain 9 manufacturing process in step SA3 of Fig. 7 is performed using the following method. The ball chain portion manufacturing process in step SA1 and the coupling part manufacturing process in step SA2 can be performed using methods similar to those of the third embodiment.

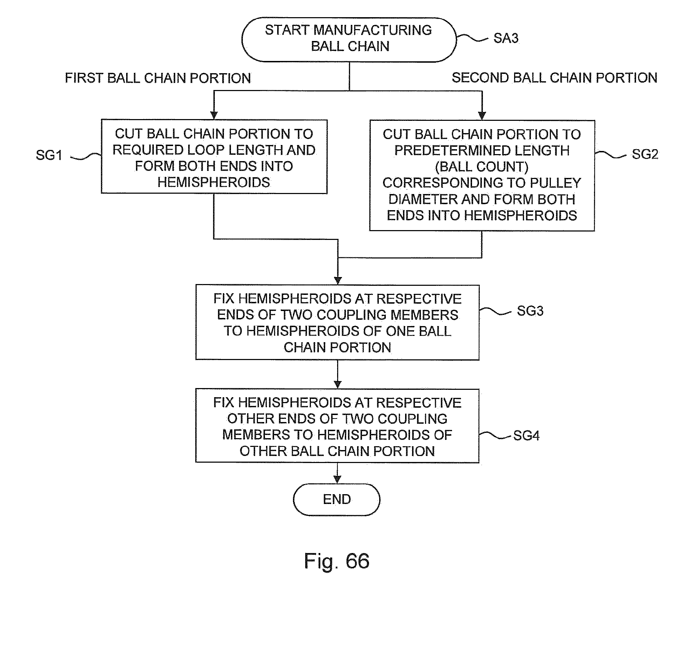

Specifically, in this embodiment, step SA3 includes steps SG1 to SG4 shown in Fig. 66. In these steps, two ball chain portions (the first and second ball chain portions 9b, 9c shown in Fig. 62) are manufactured.

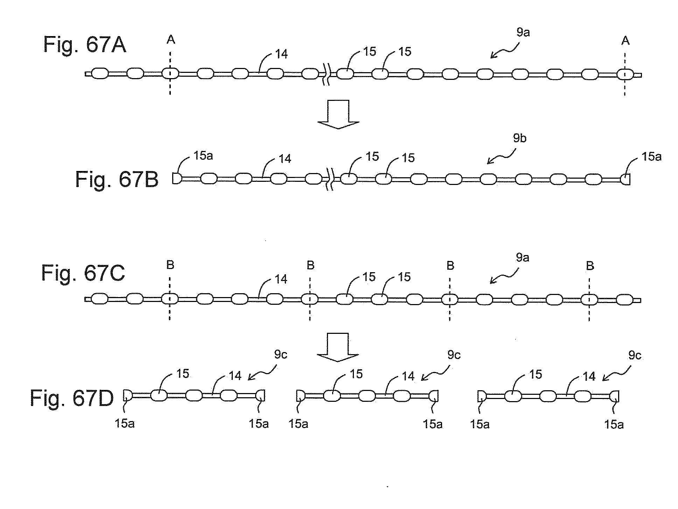

In step SG1, the ball chain portion 9a manufactured in step SA1 is cut in accordance with a required loop length, and both ends thereof are formed into the hemispheroids 15a. Thus, the second ball chain portion 9b is obtained. In an example, the ball chain portion 9a is cut at two positions as shown by dotted lines A of Fig. 67A to obtain the first ball chain portion 9b having a structure as shown in Fig. 67B.
In step SG2, the ball chain portion 9a manufactured in step SA1 is cut to a predetermined length (ball count) corresponding to the diameter of the pulley 12, and both ends thereof are formed into the hemispheroids 15a. Thus, the second ball chain portion 9c is obtained. In an example, the ball chain portion 9a is cut at positions as shown by dotted lines B of Fig. 67C to obtain the second ball chain portion 9c, as shown in Fig. 67D.
In step SG3, the coupling members 16a, 16b and the first ball chain 9b and the second ball chain 9c are disposed as shown in Fig. 62, and the hemispheroids 20 at respective ends of the two coupling members 16a, 16b are fixed to the hemispheroids 15a of one ball chain portion (e.g., second ball chain 9c).
In step SG4, the hemispheroids 20 at the respective other ends of the two coupling members 16a, 16b are fixed to the hemispheroids 15a of the other ball chain portion (e.g., first ball chain 9b).
A looped ball chain 9 or a ball chain 9 capable of being looped is obtained through the above-mentioned steps, completing the manufacture of the ball chain 9.
According to the method of this embodiment, the ball chain 9 where the two coupling members 16a, 16b are separated from each other appropriately can be easily manufactured.

In the case where the multiple coupling members constituting the coupling member 16 are not coupled together in the process of manufacturing the coupling member 16, there may be included a step of manufacturing a looped ball chain 9 by coupling, via the second coupling member 42, the first coupling members 41 disposed at both ends of the ball chain 9 which is formed by fixing the coupling members 16a, 16b to the ball chain portions 9a, 9b and which can be looped.

The first ball chain 9b and the second ball chain 9c may be manufactured by cutting the ball chain portions 9a of the same length. Alternatively, the second ball chain 9c may be manufactured by separately preparing a ball chain portion 9a having a relatively short length to manufacture the second ball chain 9c and cutting that ball chain portion 9a.
Alternatively, the second ball chain 9c may be manufactured by outsert-molding the hemispheroids 15a at both ends of the cord 14 from a resin. In this case, the cutting step can be omitted, making the manufacture efficient. Alternatively, the second ball chain 9c may be manufactured by outsert-molding the hemispheroid 15a at one end of the cord 14 from a resin and cutting the other end. In this case, the number of cutting steps can be reduced.

### (Ninth Embodiment)

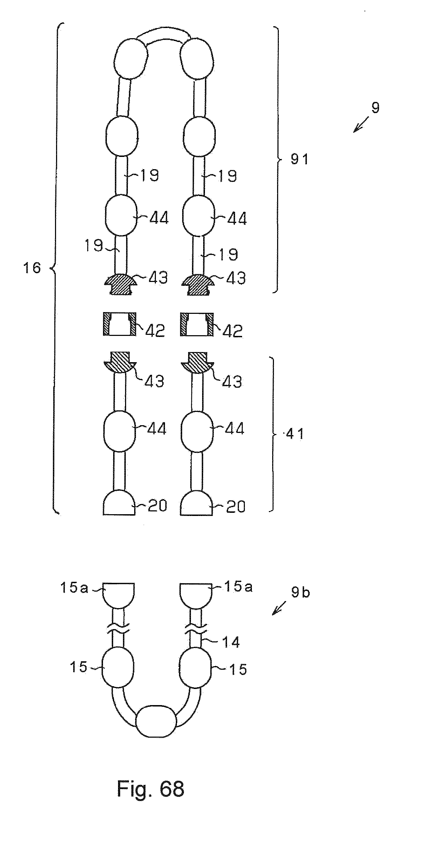

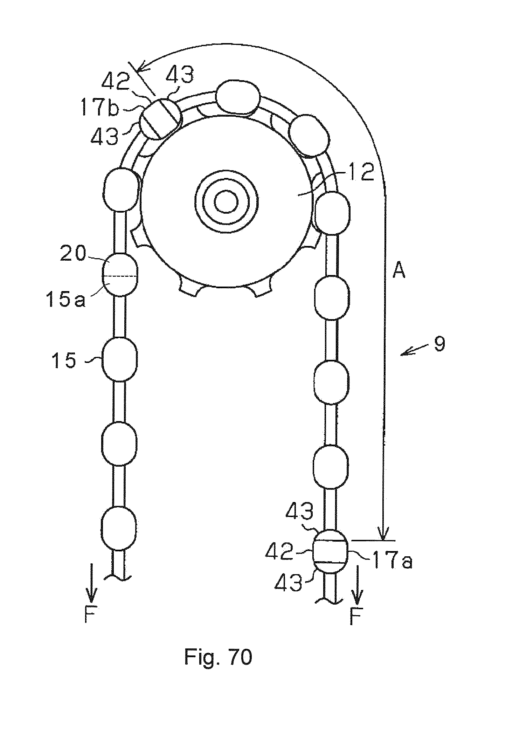

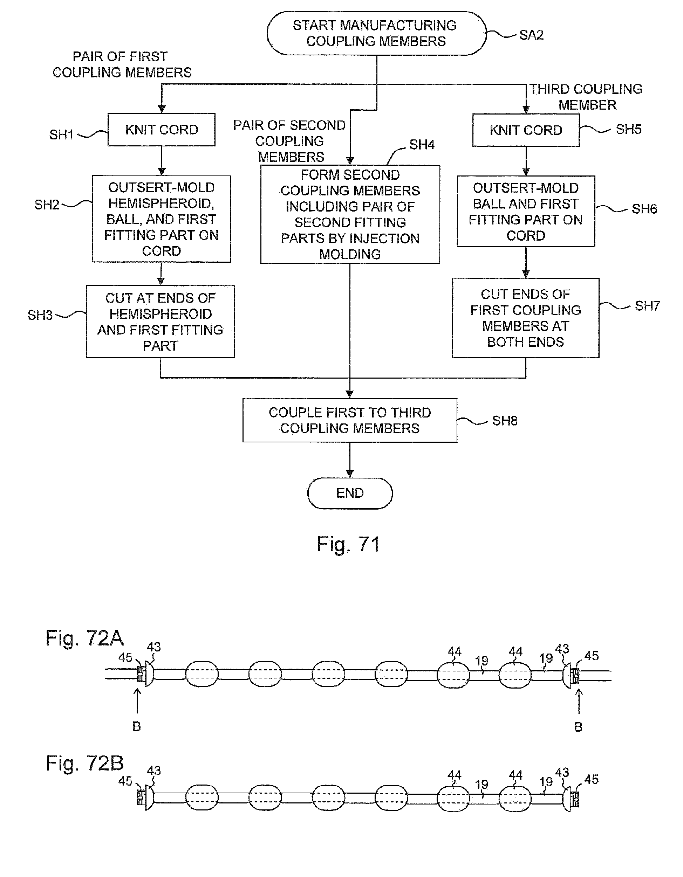

Figs. 68 to 72 show a ninth embodiment of the ball chain 9.
The coupling member 16 of the ball chain 9 of this embodiment has the same structure as that obtained by fixing the two coupling members, 16a, 16b, of the eighth embodiment to the second ball chain portion 9c. Accordingly, the coupling member 16 of this embodiment has two dividable fitting structures, and each fitting structure is the same as that of the third embodiment.
Specifically, the coupling member 16 of this embodiment includes the pair of first coupling members 41 each including the first fitting part 43 and having the hemispheroid 20 at an end thereof, a third coupling member 91 having the first fitting parts 43 at both ends and having a length of half or more the circumferential length of the pulley 12, and the pair of second coupling members 42 including a pair of second fitting parts configured to the first fitting part 43 of the first coupling member 41 and the first fitting part 43 of the third coupling member 91, respectively.
Hereafter, a method for manufacturing the ball chain 9 of this embodiment will be described.
The ball chain 9 of this embodiment can basically be manufactured using the same method as the third embodiment.
The coupling member 16 manufacturing process in step SA2 of Fig. 7 is performed using the following method.
Specifically, in this embodiment, step SA2 includes steps SH 1 to SH8 shown in Fig 71. The coupling member 16 includes the pair of first coupling members 41, the pair of second coupling members 42, and the single third coupling member 91. Steps SH 1 to SH3 relate to a process of manufacturing the first coupling member 41; steps SH4 relates to a process of manufacturing the second coupling member 42; steps SH5 to SH7 relate to a process of manufacturing the third coupling member 91; and step SH8 relates to a process of coupling the first to third coupling members 41, 42, 91.

### (2-1) Manufacturing First Coupling Members 41

The first coupling members 41 are manufactured by performing steps SH 1 to SH3 using methods similar to those in steps SE1 to SE3 of the third embodiment.

### (2-2) Manufacturing Second Coupling Member 42

The second coupling members 42 are manufactured by performing step SH4 using a method similar to that in step SE4 of the third embodiment.

### (2-1) Manufacturing Third Coupling Member 91

In step SH5, fiber such as polyester is knitted into the cord 19. In step SH6, as shown in Fig. 72A, the balls 44 and the first fitting parts 43 are outsert-molded on the cord 19. Each first fitting part 43 includes the fitting protrusion 45, which is a solid body. In step SH7, the cord 19 is cut at ends of the first fitting parts 43 (the positions of arrows B of Fig. 72A) at both ends thereof to obtain a structure shown in Fig. 72B. Thus, the manufacture of the third coupling member 91 is completed. The number of balls 44 is adjusted according to the diameter of the pulley 12 as appropriate.

### (2-4) Coupling First To Third Coupling Members 41, 42, 91

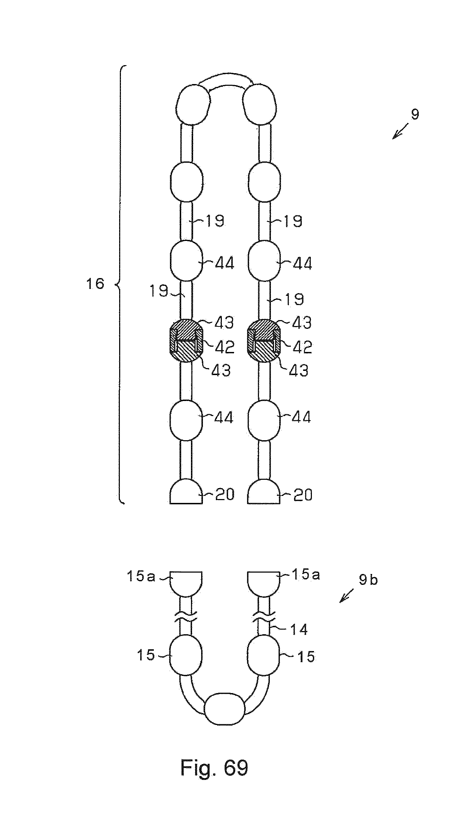

In step SH8, the first to third coupling members 41, 42, 91 are coupled together. The coupling among the first to third coupling members 41, 42, 91 can be achieved using the same method as the third embodiment.
By performing the above-mentioned steps, the manufacture of the coupling member 16 having a configuration shown in Fig. 69 is completed.

While the first to third coupling members 41, 42, 91 are coupled together to form the coupling member 16 in this embodiment, these coupling members need not necessarily be coupled together. That is, the step of coupling the first to third coupling members 41, 42, 91 (step SH8 in this embodiment) can be omitted.

In the case where the multiple coupling members constituting the coupling member 16 are not coupled together in the process of manufacturing the coupling member 16, there may be included a step of manufacturing a looped ball chain 9 by coupling, via the second coupling members 42 and the third coupling member 91, the first coupling members 41 disposed at both ends of the ball chain 9 which is formed by fixing the coupling member 16 to the ball chain portion 9a and which can be looped.

While the present invention has been described based on the various embodiments, the scope of the invention is not limited to these embodiments. Features of an embodiment are applicable to another embodiment without departing from the spirit and scope of the invention.

### DESCRIPTION OF NUMERALS

9...ball chain, 9a...ball chain portion, 9b...first ball chain portion, 9c...second ball chain portion, 12...pulley, 14...cord, 15, 44...ball, 15a, 20, 24...hemispheroid, 16...coupling portion, 17, 27, 41, 61... first coupling member, 18, 28, 42, 62...second coupling member, 19...coupling cord, 21, 29, 63...first fitting part, 22, 30, 45, 65, 73...fitting protrusion, 23...Coupling cord, 25, 34...second fitting part, 26, 35, 67, 75...fitting hole, 72...fitting recess, 74...shaft, 76...opening groove, 77...insertion hole, 91...third coupling member

## Claims

1. A method for manufacturing a ball chain, comprising the steps of:
forming a ball chain portion having a plurality of balls disposed on a cord at regular intervals;
forming a coupling member including a portion that can be coupled and divided; cutting the ball chain portion in such a manner that a loop length thereof becomes a desired length; and
joining respective ends of the ball chain portion and the coupling member.

2. The method of claim 1, wherein
the coupling member has a hemispheroid at an end thereof, and
the ball chain portion is cut in such a manner that an end thereof becomes a hemispheroid.

3. The method of claim 1, wherein
the ball chain portion is formed by outsert-molding balls on a cord.

4. The method of any one of claims 1 to 3, wherein
the coupling member comprises first and second coupling members, the first coupling member comprising a first fitting part and having a hemispheroid at an end thereof, the second fitting member comprising a second fitting part and having an hemispheroid at an end thereof, the second fitting part being capable of being fitted with the first fitting part, and
an external shape of the first and second fitting parts fitted with each other is approximately the same shape as the balls on the ball chain portion.

5. The method of claim 4, wherein
the first coupling member is formed by outsert-molding the first fitting part and the hemispheroid on a cord, the first fitting part comprising a fitting protrusion, the fitting protrusion being a solid body, and cutting the cord at respective ends of the first fitting part and the hemispheroid, and
the second coupling member is formed by outsert-molding a precursor of the second fitting part and the hemispheroid on a cord, cutting the cord at respective ends of the precursor and the hemispheroid, and drilling a fitting hole in the precursor to form the second fitting part.

6. The method of claim 5, wherein
the fitting protrusion is shank-shaped,
the fitting hole has a diameter which allows the fitting protrusion to be inserted into the fitting hole, and an open groove which allows the fitting protrusion to be pulled out in an axis direction of the cord, and
a width of the open groove is narrower than a diameter of the fitting protrusion.

7. The method of claim 1, wherein
the coupling member comprises a pair of first coupling members and a second coupling member, each first coupling member comprising a first fitting part and having a hemispheroid at an end thereof, the second coupling member comprising a pair of second fitting parts configured to be fitted with the pair of first coupling members, respectively.

8. The method of claim 7, wherein
the first coupling member is formed by outsert-molding the first fitting part and the hemispheroid on a cord and cutting the cord at respective ends of the first fitting part and the hemispheroid, and
the second coupling member is formed by injection molding.

9. The method of any one of claims 7 and 8, wherein
the first fitting part of the first coupling member comprises a fitting protrusion, the fitting protrusion being a solid body,
the second coupling member is a tubular member having second fitting parts at both ends thereof, each second fitting part having a fitting hole provided with a locking portion,
a front end of the fitting protrusion is provided with a swelled portion having a diameter larger than a diameter of a base end of the fitting protrusion, and
the fitting hole is provided with the locking portion configured to engage with the swelled portion.

10. The method of claim 9, wherein
the locking portion provided in the fitting hole engages with the swelled portion by inserting the swelled portion into the fitting hole and rotating the swelled portion.

11. The method of claim 7, wherein
the fitting part of the first coupling member has a fitting hole,
the second coupling member comprises a pair of fitting protrusions and a shaft, the fitting protrusions being provided at both ends of the second coupling member and capable of being fitted into the fitting hole, the shaft coupling the pair of fitting protrusions together, and
the fitting hole is a fitting hole into which the fitting protrusions can be inserted in a direction perpendicular to an axis of the cord.

12. The method of claim 11, wherein
the second coupling member is formed by integrally molding the fitting protrusion and the shaft from synthetic resins having different rigidities.

13. The method of claim 1, wherein
the plurality of ball chain portions are formed,
the plurality of coupling members are formed,
at least one of the ball chain portions is cut in such a manner that a loop length thereof becomes a desired length,
respective ends of the coupling members are joined to one of the ball chain portions, and
the respective other ends of the coupling members are joined to another of the ball chain portions.

14. A method for manufacturing a ball chain for an operation apparatus where by operating a ball chain engaged with a pulley and suspended from the pulley, the pulley is rotationally driven, the method comprising the steps of:
forming a ball chain portion having a plurality of balls disposed on a cord at regular intervals;
forming a coupling member comprising a portion that can be coupled and divided; cutting the ball chain portion in such a manner that a loop length thereof becomes a desired length; and
joining respective ends of the ball chain portion and the coupling member, wherein
the coupling member comprises a pair of first coupling members, a third coupling member, and a pair of second coupling members, each first coupling member comprising a first fitting part, the third coupling member having first fitting parts at both ends thereof, a length of the third coupling member being half or more of a circumferential length of the pulley, each second coupling member comprising a pair of fitting parts configured to engage with the first fitting parts of the first coupling members and the first fitting parts of the third coupling members.

15. The method of claim 14, wherein
the first coupling member has a hemispheroid at an end thereof, and
the ball chain portion is cut in such a manner that an end thereof becomes a hemispheroid.

16. A ball chain coupling member comprising:
a first coupling member comprising a first fitting part and having a hemispheroid at an end thereof; and
a second coupling member comprising a second fitting part capable of being fitted with the first fitting part and having a hemispheroid at an end thereof.

17. A ball chain coupling member comprising:
a pair of first coupling members each comprising a first fitting part and having a hemispheroid at an end thereof; and
a second coupling member comprising a pair of second fitting parts configured to be fitted with the pair of first coupling members, respectively.
